# EUROPEAN PATENT APPLICATION

(11) **EP 4 156 071 A1**
(43) Date of publication of application: **29.03.2023**
(21) Application number: 21807910.1
(22) Date of filing: 06.05.2021
(51) Int. Cl.: G06Q 40/04, G06Q 40/06

(54) **INFORMATION PROVIDING DEVICE AND METHOD, PROGRAM, AND INFORMATION PROCESSING TERMINAL**

(30) Priority: 20.05.2020 JP 2020088308
(71) Applicant: Sony Group Corporation, Minato-Ku, Tokyo, 108-0075 (JP)
(72) Inventor: SHIMIZU, Yusuke, Tokyo 108-0075 (JP); NISHI, Ayaka, Tokyo 108-0075 (JP)
(74) Representative: D Young & Co LLP
(86) International application number: PCT/JP2021/017335
(87) International publication number: WO 2021/235224

(57) **Abstract**

The present technology relates to an information providing apparatus and method, a program, and an information processing terminal capable of easily acquiring information regarding asset management of an individual.

An information providing apparatus manages information regarding agreement to provide financial transaction information between a first user and a financial institution and selection information of a disclosure destination of the financial transaction information which are transmitted from a first terminal, and asset management information including the financial transaction information that the first user has agreed to provide; provides the asset management information to a service providing apparatus selected as the disclosure destination; generates information regarding a UI of a browsing page based on the asset management information; transmits the information regarding the UI of the browsing page to a second terminal used by a second user in response to a request from the second terminal; manages a usage status of the UI of the browsing page by the second terminal, and transmits, to the first terminal, information regarding a profit to be returned to the first user in accordance with the usage status. The present technology can be applied to an asset management information providing system.

## Description

### TECHNICAL FIELD

The present technology relates to an information providing apparatus and method, a program, and an information processing terminal, and more particularly, to an information providing apparatus and method, a program, and an information processing terminal capable of easily acquiring information regarding asset management of an individual.

### BACKGROUND ART

Individual asset management (deposit and saving, foreign currency deposit, savings-type life insurance, government bonds, stocks, FX, cryptocurrency, real estate, and the like) is increasingly important. On the other hand, for example, a system that can predict a future asset status of a customer and enables effective advice to the customer has been proposed (see Patent Document 1).

In such an era, there is a demand for knowing and referring to a process of what type of investment method/technique was used by a person who succeeded in or failed in asset management and what type of asset formation was performed by the investment method/technique.

### CITATION LIST

### PATENT DOCUMENT

Patent Document 1: Japanese Patent Application Laid-Open No. 2019-211995

### SUMMARY OF THE INVENTION

### PROBLEMS TO BE SOLVED BY THE INVENTION

However, the investment method/technique of individual asset management and the process of asset management are personal information and confidential information (information close to), and thus are not usually disclosed.

The present technology has been made in view of such a situation, and enables easy acquisition of information regarding individual asset management.

### SOLUTIONS TO PROBLEMS

An information providing apparatus according to a first aspect of the present technology includes: an information management unit that manages information regarding agreement to provide financial transaction information between a first user and a financial institution and selection information of a disclosure destination of the financial transaction information which are transmitted from a first terminal, and asset management information including the financial transaction information that the first user has agreed to provide; an information providing unit that provides the asset management information to a service providing apparatus selected as the disclosure destination; a generation unit that generates information regarding a UI of a browsing page based on the asset management information; a transmission unit that transmits the information regarding the UI of the browsing page to a second terminal used by a second user in response to a request from the second terminal; and a profit returning unit that manages a usage status of a UI of the browsing page by the second terminal, and transmits, to the first terminal, information regarding a profit to be returned to the first user in accordance with the usage status.

In the first aspect of the present technology, the information regarding the agreement to provide financial transaction information between the first user and the financial institution and the selection information of the disclosure destination of the financial transaction information which are transmitted from the first terminal, and the asset management information including the financial transaction information that the first user has agreed to provide are managed, and the asset management information is provided to the service providing apparatus selected as the disclosure destination. Then, the information regarding the UI of the browsing page based on the asset management information is generated, the information regarding the UI of the browsing page is transmitted to the second terminal in response to a request from the second terminal used by the second user, the usage status of the UI of the browsing page by the second terminal is managed, and the information regarding the profit to be returned to the first user in accordance with the usage status is transmitted to the first terminal.

An information processing terminal according to a second aspect of the present technology includes: a provision agreement unit that obtains, from a user, agreement to provide financial transaction information between the user and a financial institution on the basis of an operation of the user; a transmission unit that transmits information regarding the agreement and selection information of a disclosure destination of the financial transaction information to an information providing apparatus; and a reception unit that receives, from the information providing apparatus, information regarding a profit to be returned to the user in accordance with the usage status by another information processing terminal of a UI of a browsing page based on asset management information including the financial transaction information, the information regarding the agreement, and the selection information of the disclosure destination of the financial transaction information.

In the second aspect of the present technology, the agreement to provide the financial transaction information between the user and the financial institution is obtained from the user on the basis of an operation of the user. Then, the information regarding the agreement and the selection information of the disclosure destination of the financial transaction information are transmitted to the information providing apparatus, and the information regarding the profit to be returned to the user is received from the information providing apparatus in accordance with the usage status by another information processing terminal of the UI of the browsing page based on the asset management information including the financial transaction information, the information regarding the agreement, and the selection information of the disclosure destination of the financial transaction information.

An information processing terminal according to a third aspect of the present technology includes: a communication unit that requests and receives, on the basis of an operation of the second user, information regarding agreement to provide financial transaction information between a first user and a financial institution, selection information of a disclosure destination of the financial transaction information, and information regarding a UI of a browsing page based on asset management information including the financial transaction information that the first user has agreed to provide; and an output control unit that controls an output of the received information regarding the UI of the browsing page.

In the third aspect of the present technology, the information regarding the agreement to provide the financial transaction information between the first user and the financial institution, the selection information of the disclosure destination of the financial transaction information, and the information regarding the UI of the browsing page based on the asset management information including the financial transaction information that the first user has agreed to provide are requested and received on the basis of the operation of the second user. Then, the output of the received information regarding the UI of the browsing page is controlled.

### BRIEF DESCRIPTION OF DRAWINGS

Fig. 1 is a diagram illustrating a configuration of an embodiment of an asset management information providing system to which the present technology is applied.
Fig. 2 is a block diagram illustrating a hardware configuration example of a user terminal 11.
Fig. 3 is a block diagram illustrating a functional configuration example of the user terminal 11.
Fig. 4 is a block diagram illustrating a functional configuration example of a financial institution server 12.
Fig. 5 is a block diagram illustrating a functional configuration example of an information bank/asset management server 13.
Fig. 6 is a diagram illustrating information stored in a DB managed by an information management unit 62.
Fig. 7 is a block diagram illustrating a functional configuration example of a service business server 14.
Fig. 8 is a block diagram illustrating a functional configuration example of a user terminal 15.
Fig. 9 is a flowchart for explaining processing of the asset management information providing system.
Fig. 10 is a flowchart for explaining the processing of the asset management information providing system, following Fig. 9.
Fig. 11 is a diagram illustrating a configuration example of asset management information.
Fig. 12 is a diagram illustrating an example of a UI screen of a browsing page of the asset management information.
Fig. 13 is a diagram illustrating an example of a UI screen in a PFM contract.
Fig. 14 is a diagram illustrating another example of the UI screen in the PFM contract.
Fig. 15 is a diagram illustrating an example of a UI screen in agreement on personal information provision.
Fig. 16 is a diagram illustrating another example of the UI screen in agreement on personal information provision.
Fig. 17 is a diagram illustrating an example of a UI screen in user registration for viewing of the asset management information.
Fig. 18 is a diagram illustrating a modification of the UI screen of the browsing page of the asset management information of Fig. 12.
Fig. 19 is a diagram illustrating an example of a UI screen of a notification of profit return.
Fig. 20 is a flowchart for explaining connection processing by the information bank/asset management server 13.
Fig. 21 is a flowchart for explaining the connection processing by the information bank/asset management server 13, following Fig. 20.
Fig. 22 is a diagram illustrating an example of a UI screen displayed on the user terminal 15.
Fig. 23 is a diagram illustrating another example of the UI screen displayed on the user terminal 15.
Fig. 24 is a diagram illustrating an example of a UI screen displayed on a user terminal 11.
Fig. 25 is a diagram illustrating another example of the UI screen displayed on the user terminal 11.

### MODE FOR CARRYING OUT THE INVENTION

Hereinafter, modes for carrying out the present technology will be described. The description will be given in the following order.
1. First Embodiment (Asset Management Information Providing System)
2. Second Embodiment (Exchange between Information Providing User and Viewing User)
3. Others

### <1. First Embodiment (Asset Management Information Providing System)>

### (Configuration Example of Asset Management Information Providing System)

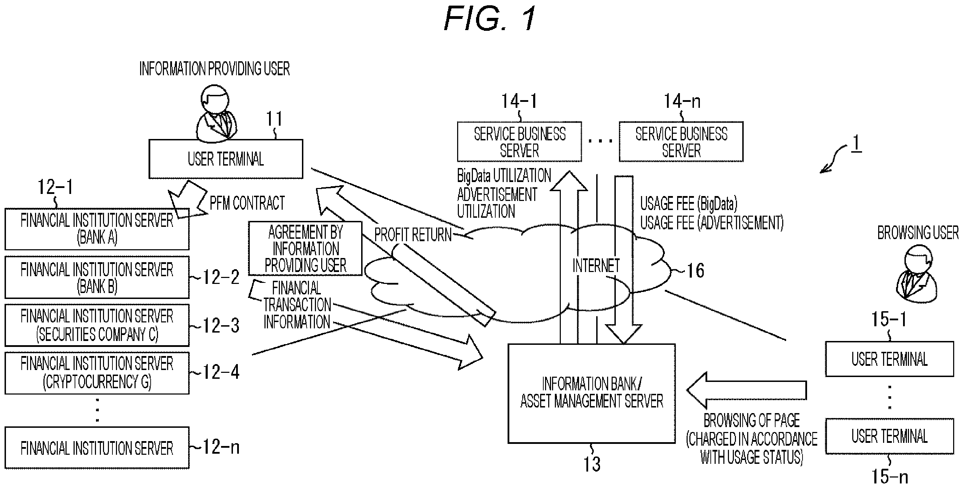

Fig. 1 is a diagram illustrating a configuration of an embodiment of an asset management information providing system to which the present technology is applied.

An asset management information providing system 1 of Fig. 1 is a system that discloses an asset status, an investment method/technique, and the like of a user (individual) and returns a profit to the user by being browsed by another user. Note that the user is an individual, but may be a corporation.

Specifically, in the asset management information providing system 1, a service of personal financial management (PFM) and a system structure of an information bank are applied. PFM is a service for efficiently performing asset design and management by aggregating, in a unified manner, account information of various financial institutions provided via the Internet, such as bank deposits, securities, credit cards, and insurance. The information bank is a system structure that appropriately manages and operates data for which agreement for provision has been obtained from users. The financial institution is an organization that conducts business related to financial transactions. The financial institution includes, for example, a bank, an insurance company, a credit association, a financial institution for small and medium companies, a financial institution for agriculture, forestry, and fishery, a securities company, a non-bank, an investment trust management company, a cryptocurrency management company, and the like.

The asset management information providing system 1 includes a user terminal 11, financial institution servers 12-1 to 12-n, an information bank/asset management server 13, service business servers 14-1 to 14-n, and user terminals 15-1 to 15-n.

The user terminal 11, the financial institution servers 12-1 to 12-n, the information bank/asset management server 13, the service business servers 14-1 to 14-n, and the user terminals 15-1 to 15-n are mutually connected via the Internet 16. In the asset management information providing system 1, information is exchanged between the apparatuses via the Internet 16.

Note that the financial institution servers 12-1 to 12-2, the service business servers 14-1 to 14-n, and the user terminals 15-1 to 15-n are collectively referred to as a financial institution server 12, a service business server 14, and a user terminal 15, respectively, in a case where there is no need to distinguish them.

The user terminal 11 includes a personal computer, a tablet terminal, a smartphone, and the like. The user terminal 11 is used by a user (hereinafter, referred to as an information providing user) who agrees to provide financial transaction information. The financial transaction information includes, for example, information such as a financial transaction amount, a financial transaction date and time, and a financial transaction type. The financial transaction type includes, for example, stocks, investment trusts, real estate, cryptocurrency, and the like.

The information providing user operates the user terminal 11 to perform processing of entering into a PFM contract with the financial institution server 12 of a desired financial institution, thereby entering into the PFM contract with at least one financial institution. By entering into the PFM contract, the user terminal 11 obtains financial transaction information from the financial institution server 12 of the financial institution that has entered into the PFM contract.

The information providing user agrees to provide personal information regarding financial transaction information, and inputs information regarding agreement to provide personal information (hereinafter, referred to as information regarding agreement) to the user terminal 11. In response to this, the user terminal 11 transmits information regarding the agreement to the financial institution server 12 that has entered into the PFM contract and the information bank/asset management server 13.

At that time, the information providing user selects a service provider of a disclosure destination that discloses personal information of the information providing user, and inputs attribute information of the information providing user to the user terminal 11. The information regarding the selection of the disclosure destination and the attribute information of the information providing user are transmitted to the information bank/asset management server 13 by the user terminal 11 as related information of the financial transaction information. Note that, although only one user terminal is illustrated in Fig. 1, user terminals 11 are configured by user terminals corresponding to a plurality of information providing users who use this system, that is, a plurality of user terminals 11.

The financial institution server 12-1 is a server that manages information of a bank A. The financial institution server 12-2 is a server that manages information of a bank B. The financial institution server 12-3 is a server that manages information of a securities company C. The financial institution server 12-4 is a server that manages information of a cryptocurrency G.

The financial institution server 12 transmits financial transaction information of the information providing user to the user terminal 11 of the information providing user who has entered into the PFM contract.

In addition, the financial institution server 12 receives information regarding agreement transmitted from the user terminal 11 of the information providing user who has entered into the PFM contract. The financial institution server 12 transmits financial transaction information of the agreed information providing user to the information bank/asset management server 13.

In the information bank/asset management server 13, an information bank/asset management platform is constructed. That is, the information bank/asset management server 13 applies the PFM services and the system structure of the information bank, receives the financial transaction information and its related information transmitted from the financial institution server 12 upon the agreement of the information providing user, and creates a database as the asset management information. The fund management information is information regarding fund management including financial transaction information transmitted from the financial institution server 12 and related information of the financial transaction information transmitted from the financial institution server 12 or the user terminal 11.

The information bank/asset management server 13 previously performs processing of entering into a contract for utilization of BigData that utilizes the asset management information stored in the database as BigData and a contract for utilization of advertisements in the asset management information providing system 1 with the service business server 14 of the service provider. The information bank/asset management server 13 transmits the asset management information to the service business server 14 of the service provider based on the information regarding the selection of the disclosure of the information providing user among the service providers that have entered into a contract for BigData utilization in advance.

In addition, the information bank/asset management server 13 generates a user interface (UI) of a browsing page of the asset management information and transmits information regarding the UI to the user terminal 15, thereby providing a UI screen of the browsing page of the asset management information to the user who has performed the user registration (hereinafter, referred to as a browsing user). The UI of the browsing page is a UI of a page provided for the browsing user to browse the asset management information provided by the information bank/asset management server 13. The information bank/asset management server 13 receives a request for a browsing page desired by the browsing user and transmitted from the user terminal 15. The information bank/asset management server 13 transmits information regarding the UI of the browsing page that has received the request to the user terminal 15.

In the information bank/asset management server 13, the system structure of the information bank is applied in order to return profit to the information providing user. By applying the system structure of the information bank, the information bank/asset management server 13 transmits, for example, attribute information of a user obtained by anonymizing information that identifies an individual among asset management information to the service business server 14 and provides the service provider with the attribute information. The provided asset management information is used by the service provider as marketing information for BigData analysis. As a result, the information bank/asset management server 13 can obtain profit from the service provider, and return a part of the profit obtained by providing the asset management information to the service provider to the information providing user.

Note that, for the provision of the asset management information, a part of the profit to be returned or the like may be changed in accordance with the usage status of the UI of the browsing page, which is information indicating that the browsing user has used the UI of the browsing page. The usage status of the UI of the browsing page is information including information regarding the user (the number of registered participants, the number of active users (a person who looks at the site once a week or more, a person who writes the site once a month or more, and the like), and the number of guest visitors) obtained by logs and the like, and information regarding the usage status (the number of accesses, page view) obtained by questionnaire survey and the like.

In addition, the source of income in the asset management information providing system 1 includes (1) income from providing BigData on finance to a service provider for use, (2) a fee for an advertisement displayed on a UI screen of a browsing page for the asset management information, (3) billing from a browsing user, and the like. In addition, with respect to display of an advertisement on the UI screen, not only a service provider but also a financial institution may obtain a fee for the advertisement by making a contract in advance.

The service business server 14 is a server that manages information of a service provider. The service business server 14 performs processing of entering into a contract in advance, thereby performing processing of using the asset management information transmitted from the information bank/asset management server 13 as BigData and paying a usage fee of BigData to the information bank/asset management server 13. In addition, the service business server 14 performs processing of transmitting data of a desired advertisement image and processing of paying the advertisement usage fee to the information bank/asset management server 13 in order to utilize an advertisement space provided on the UI screen of the browsing page of the asset management information provided by the information bank/asset management server 13 by performing the processing of entering into a contract in advance. Note that the use of BigData and the use of advertisements described above may be performed by the same service business server 14, or the use of BigData and the use of advertisements each may be performed by a different service business server 14.

The user terminal 15 includes a personal computer, a tablet terminal, a smartphone, and the like. The user terminal 15 is used by a browsing user who browses a UI screen of a browsing page of the asset management information provided by the asset management information providing system 1.

The user terminal 15 performs user registration processing for browsing the asset management information of the information bank/asset management server 13, and receives information regarding the UI of the browsing page of the asset management information transmitted by the information bank/asset management server 13. The user terminal 15 displays the UI screen corresponding to the received information regarding the UI, so that the browsing user can browse the UI screen of the browsing page provided by the information bank/asset management server 13. The browsing by the browsing user can be charged in accordance with the situation.

Note that, in the asset management information providing system 1, a mechanism such as an existing social networking service (SNS) or household accounts application may be applied as an example of the UI.

In the asset management information providing system 1, the browsing user can refer to investment cases of a plurality of information providing users, and the profit is returned to the information providing user in accordance with the usage status of the financial transaction information of a plurality of browsing users.

Therefore, with the asset management information providing system 1 configured as described above, the browsing user can easily acquire information regarding individual asset management. As a result, the browsing user can refer to an investment method in individual asset management.

### <Configuration of User Terminal>

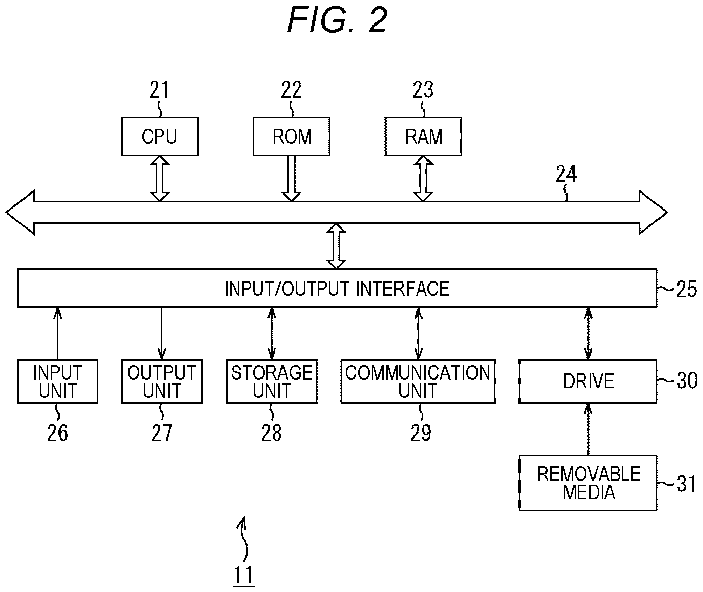

Fig. 2 is a block diagram illustrating a hardware configuration example of the user terminal 11.

A central processing unit (CPU) 21, a read only memory (ROM) 22, and a random access memory (RAM) 23 are mutually connected by a bus 24. An input/output interface 25 is further connected to the bus 24.

An input unit 26, an output unit 27, a storage unit 28, a communication unit 29, and a drive 30 are connected to the input/output interface 25.

The input unit 26 including a keyboard, a mouse, and the like, and the output unit 27 including a display, a speaker, and the like are connected to the input/output interface 25. Furthermore, the storage unit 28 including a hard disk, a nonvolatile memory, and the like, the communication unit 29 including a network interface with each device connected via the Internet 16, and the like, and the drive 30 that drives a removable medium 31 are connected to the input/output interface 25.

In the computer configured as described above, for example, the CPU 21 loads a program stored in the storage unit 28 into the RAM 23 via the input/output interface 25 and the bus 24 and executes the program, thereby performing a series of processing.

Note that the financial institution server 12, the information bank/asset management server 13, the service business server 14, and the user terminal 15 have the same configuration as the configuration illustrated in Fig. 2.

### <Functional Configuration of User Terminal>

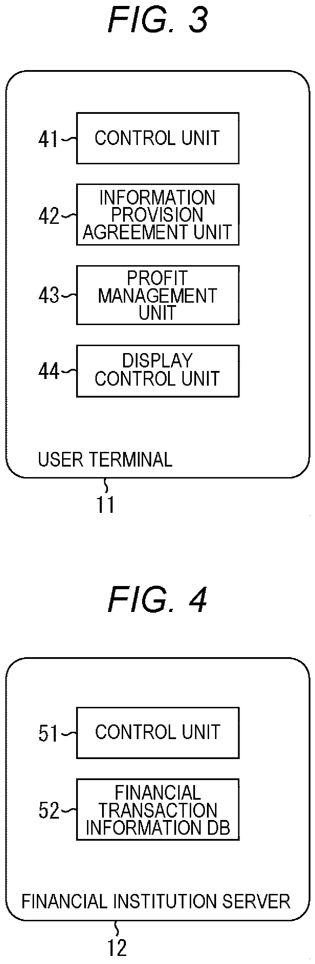

Fig. 3 is a block diagram illustrating a functional configuration example of the user terminal 11.

The functional configuration illustrated in Fig. 3 is realized by the CPU 21 in Fig. 2 executing a predetermined program.

In Fig. 3, the user terminal 11 includes a control unit 41, an information provision agreement unit 42, a profit management unit 43, and a display control unit 44.

The control unit 41 controls each unit of the user terminal 11. For example, the control unit 41 performs processing of entering into the PFM contract with the financial institution server 12 of the financial institution desired by the information providing user on the basis of the operation of the information providing user. Furthermore, the control unit 41 approves an exchange (communication) on finance_SNS (F_SNS) requested from the user terminal 15 of the browsing user via the information bank/asset management server 13 in accordance with the operation of the information providing user. As a result, the information providing user and the browsing user perform exchange on the F_SNS. The F_SNS is an SNS provided by the information bank/asset management server 13 in order for the information providing user and the browsing user to directly perform exchange, for example, by chatting.

The information provision agreement unit 42 generates information regarding agreement to agree provision of personal information regarding financial transaction information in accordance with an operation of the information providing user. At that time, the information provision agreement unit 42 also generates attribute information of the information providing user input to the user terminal 11 by the operation of the information providing user and information regarding the selection of the disclosure destination.

The information provision agreement unit 42 transmits the information regarding the agreement to the financial institution server 12 of the financial institution with which the information providing user has entered into the PFM contract. The information provision agreement unit 42 transmits the information regarding the agreement to the information bank/asset management server 13. At that time, the information provision agreement unit 42 transmits the attribute information of the information providing user and the information regarding the selection of the disclosure destination to the information bank/asset management server 13 as related information of the financial transaction information.

The profit management unit 43 receives the financial transaction information provided from the financial institution server 12 of the financial institution with which the information providing user has entered into the PFM contract, manages the financial transaction information, and manages the profit of the information providing user obtained by the financial transaction or the like. Furthermore, the profit management unit 43 receives information regarding the profit transmitted from the information bank/asset management server 13, and manages the profit of the information providing user obtained by providing the information or the like.

The display control unit 44 receives information regarding the UI transmitted from the financial institution server 12 or the information bank/asset management server 13. The display control unit 44 controls display of the UI screen corresponding to the received information regarding the UI.

### <Functional Configuration of Financial Institution Server>

Fig. 4 is a block diagram illustrating a functional configuration example of the financial institution server 12.

The functional configuration illustrated in Fig. 4 is realized by the CPU 21 in Fig. 2 executing a predetermined program.

In Fig. 4, the financial institution server 12 includes a control unit 51 and a financial transaction information DB 52.

The control unit 51 controls each unit of the financial institution server 12. For example, the control unit 51 performs processing of entering into the PFM contract of the information providing user with the user terminal 11, and stores the attribute information of the information providing user in the financial transaction information DB 52. The control unit 51 transmits the financial transaction information of the information providing user extracted from the financial transaction information DB 52 to the user terminal 11.

In a case of receiving the information regarding the agreement transmitted from the user terminal 11, the control unit 51 extracts financial transaction information agreed by the information providing user from the financial transaction information DB 52 and transmits the extracted financial transaction information to the information bank/asset management server 13.

The financial transaction information DB 52 stores and manages the financial transaction information in the financial institution, the attribute information of the information providing user, and the like.

### <Functional Configuration of Information Bank/Asset Management Server>

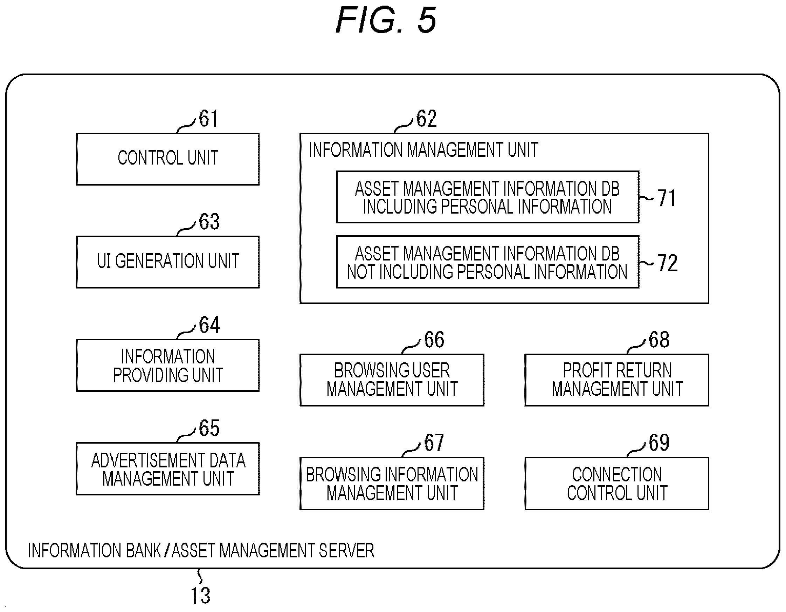

Fig. 5 is a block diagram illustrating a functional configuration example of the information bank/asset management server 13.

In Fig. 5, the information bank/asset management server 13 includes a control unit 61, an information management unit 62, a UI generation unit 63, an information providing unit 64, an advertisement data management unit 65, a browsing user management unit 66, a browsing information management unit 67, a profit return management unit 68, and a connection control unit 69.

The control unit 61 controls each unit of the information bank/asset management server 13. For example, the control unit 61 receives the information regarding the agreement, the attribute information of the information providing user, and the information regarding the selection of the disclosure destination transmitted from the user terminal 11, and outputs the information to the information management unit 62. In addition, the control unit 61 receives the financial transaction information of the information providing user transmitted from the financial institution server 12, and outputs the financial transaction information to the information management unit 62.

Note that, in the information bank/asset management server 13, the attribute information of the information providing user and the information regarding the selection of the disclosure destination are received as related information of the financial transaction information.

The information management unit 62 includes an asset management information DB 71 including personal information and an asset management information DB 72 not including personal information. The information management unit 62 manages, as the asset management information, the information regarding the agreement supplied from the control unit 61, the financial transaction information of the information providing user, and the related information of the financial transaction information. The information management unit 62 manages the asset management information by the above-described two types of DBs depending on the presence or absence of the personal information.

The UI generation unit 63 generates a UI of a user registration page for browsing the asset management information, a browsing page of the asset management information and the like, and manages information regarding the generated UI. The UI generation unit 63 transmits information regarding the UI of the page desired by the browsing user to the user terminal 15. Furthermore, the UI generation unit 63 generates a UI of F_SNS, which is a place where the information providing user and the browsing user directly perform exchange. The UI generation unit 63 transmits the generated information regarding the UI to the user terminal 11 or the user terminal 15.

The information providing unit 64 performs processing of entering into a contract for BigData utilization with the service business server 14 of the service provider who requests BigData utilization. In response to a request from the service business server 14 of the service provider who has entered into the contract, the information providing unit 64 transmits asset management information within a range (age, period, sex, etc.) desired by the service provider who has entered into the contract, from among the asset management information managed by the information management unit 62.

Note that, at that time, the information providing unit 64 provides the asset management information of the information providing user selecting the service provider who has entered into the contract as the disclosure destination. The information providing unit 64 receives the usage fee from the service business server 14 that has received the asset management information.

The advertisement data management unit 65 performs processing of entering into a contract for advertisement utilization with the service business server 14 of the service provider who requests the advertisement utilization. The advertisement data management unit 65 receives advertisement image data and usage fee from the service business server 14 of the service provider who has entered into the contract. The advertisement data management unit 65 manages the advertisement image data received from the service business server 14.

The browsing user management unit 66 manages attribute information and the like of the browsing user who has performed the user registration transmitted from the user terminal 15.

The browsing information management unit 67 manages information related to browsing of the asset management information of the information bank/asset management server 13. Examples of the information regarding the browsing of the asset management information include the usage status of the browsing page of the asset management information (the number of times of browsing of graphs or the information of the browsing page, the number of reviews of the browsing page, and the number of browsing users who followed the information providing user), the evaluation of a history and content of the exchange on the F_SNS between the information providing user and the browsing user, the evaluation of the information providing user, the evaluation of the browsing user, and the like.

The profit return management unit 68 obtains and manages the profit to be returned to the information providing user. The profit to be returned to the information providing user is obtained on the basis of, for example, the number of times and the usage fee that the asset management information of the information providing user is utilized by the service provider, the usage status of the browsing page of the asset management information among the information regarding the browsing of the asset management information managed by the browsing information management unit 67, and particularly, the information regarding the information providing user (the number of reviews, the number of views, and the evaluation). The profit return management unit 68 transmits the information regarding the obtained profit to the user terminal 11 of the information providing user.

In a case where an exchange with the information providing user on the F_SNS is requested from the user terminal 15 of the browsing user, the connection control unit 69 connects the user terminal 11 and the user terminal 15 on the F_SNS to provide an exchange place (F_SNS) between the information providing user and the browsing user. Note that the exchange on the F_SNS is performed for a predetermined period of time set in advance. In a case where the extension of the exchange is requested from the user terminal 15 of the browsing user, the connection control unit 69 extends the time for the exchange on the F_SNS in accordance with approval of the information providing user transmitted from the user terminal 11.

### <Configuration Example of DB Managed by Information Management Unit>

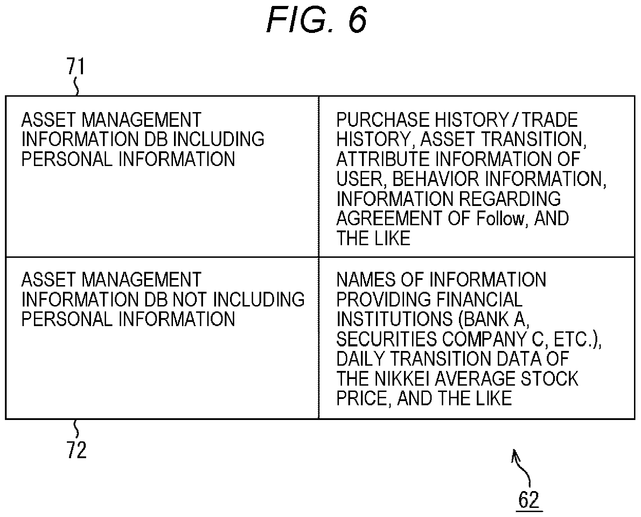

Fig. 6 is a diagram illustrating information stored in the DBs managed by the information management unit 62.

The information management unit 62 manages the asset management information DB 71 including personal information and the asset management information DB 72 not including personal information.

The asset management information DB 71 including personal information stores financial transaction information (purchase history, trade history, asset transition) of the information providing user, related information of the financial transaction information such as attribute information of the information providing user, behavior information of the information providing user, and the like. Furthermore, the asset management information DB 71 including personal information stores information regarding an agreement of Follow indicating whether or not the information providing user permits Follow of the browsing user, and the like.

The asset management information DB 72 not including personal information stores names of financial institutions that have provided financial transaction information (bank A, securities company C, cryptocurrency G, etc.), daily transition data of the Nikkei average stock price, and the like.

### <Functional Configuration of Service Business Server>

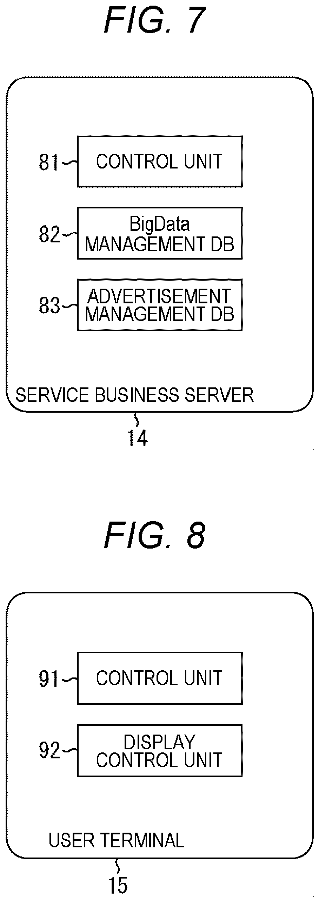

Fig. 7 is a block diagram illustrating a functional configuration example of the service business server 14.

The functional configuration illustrated in Fig. 7 is realized by the CPU 21 in Fig. 2 executing a predetermined program.

In Fig. 7, the service business server 14 includes a control unit 81, a BigData management DB 82, and an advertisement management DB 83.

The control unit 81 controls each unit of the service business server 14. For example, the control unit 81 performs processing of entering into a contract in advance with the information bank/asset management server 13 and requests provision of asset management information, thereby storing the asset management information transmitted from the information bank/asset management server 13 in the BigData management DB 82. The control unit 81 uses the financial transaction information stored in the BigData management DB 82 as BigData. The control unit 81 performs processing of paying a usage fee for BigData to the information bank/asset management server 13.

In addition, the control unit 81 performs processing of entering into a contract in advance with the information bank/asset management server 13. In order to utilize the advertisement space provided on the UI screen of the browsing page provided by the information bank/asset management server 13, the control unit 81 provides the information bank/asset management server 13 with data of a desired advertisement image stored in the advertisement management DB 83. The control unit 81 performs processing of paying the advertisement usage fee to the information bank/asset management server 13.

The BigData management DB 82 stores and manages asset management information as BigData.

The advertisement management DB 83 stores and manages data of advertisement images of the service provider.

### <Functional Configuration of User Terminal>

Fig. 8 is a block diagram illustrating a functional configuration example of the user terminal 15.

The functional configuration illustrated in Fig. 8 is realized by the CPU 21 in Fig. 2 executing a predetermined program.

In Fig. 8, the user terminal 15 includes a control unit 91 and a display control unit 92.

The control unit 91 controls each unit of the user terminal 15. For example, the control unit 91 accesses the information bank/asset management server 13 in accordance with the operation of the browsing user, and performs user registration processing for browsing the asset management information of the information bank/asset management server 13. The control unit 91 accesses the information bank/asset management server 13 and makes a browsing request for a desired browsing page of the asset management information.

Furthermore, the control unit 91 requests the user terminal 11 of a desired information providing user to perform exchange via the information bank/asset management server 13. The control unit 91 obtains approval of exchange from the information providing user from the user terminal 11, thereby causing the browsing user to perform exchange with the information providing user on the F_SNS provided by the information bank/asset management server 13.

The display control unit 92 receives the information regarding the UI transmitted from the information bank/asset management server 13, and controls the display of the UI screen corresponding to the received information regarding the UI.

### <Processing of Asset Management Information Providing System>

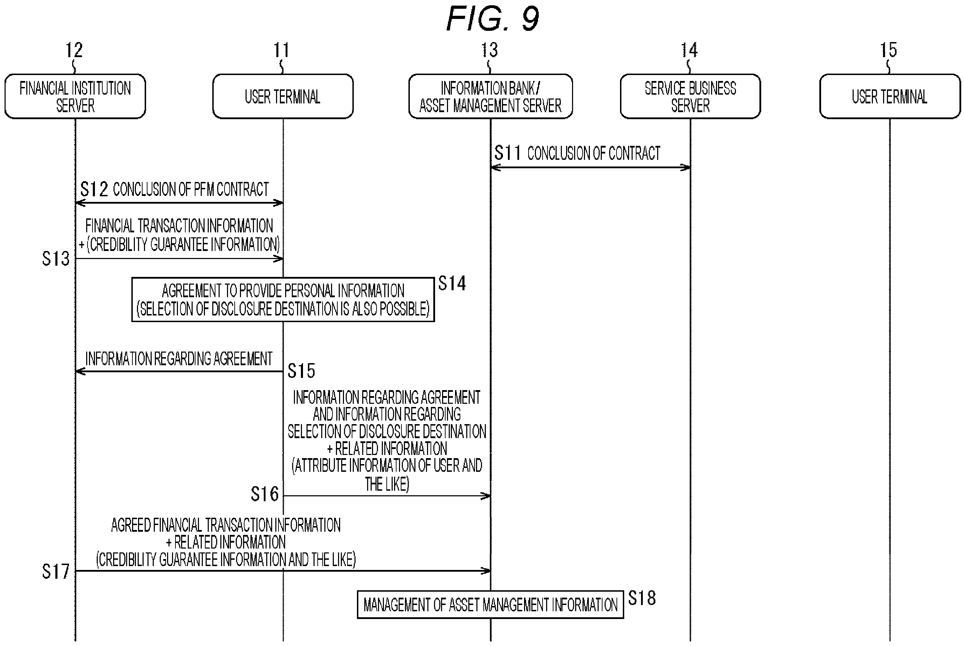

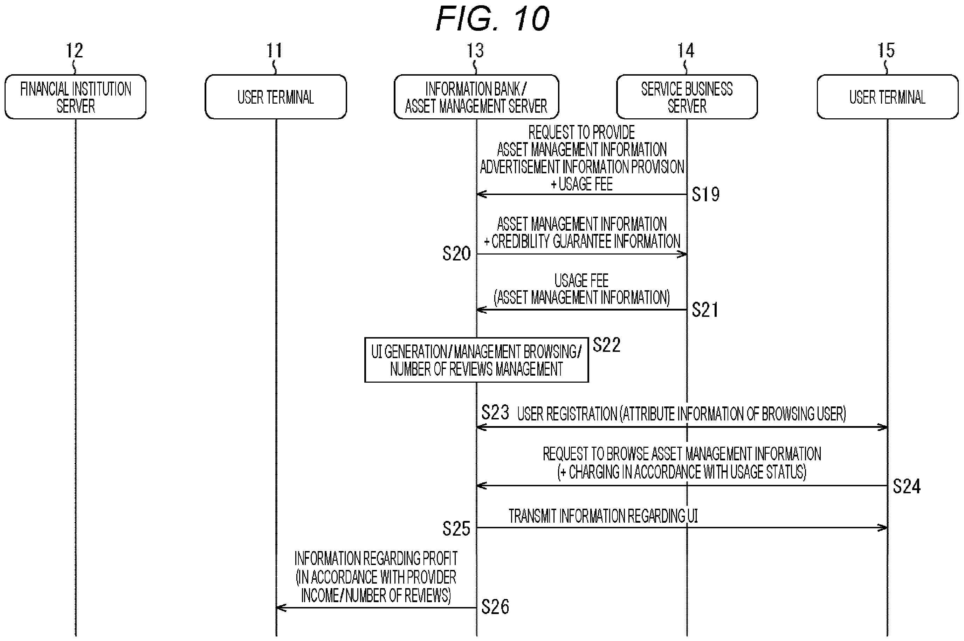

Figs. 9 and 10 are flowcharts for explaining processing of the asset management information providing system 1.

In step S11 of Fig. 9, the information providing unit 64 of the information bank/asset management server 13 performs processing of entering into a contract for BigData utilization with the control unit 81 of the service business server 14. In addition, the advertisement data management unit 65 of the information bank/asset management server 13 performs processing of entering into a contract for advertisement utilization with the control unit 81 of the service business server 14.

In step S12, the control unit 41 of the user terminal 11 performs processing of entering into the PFM contract with the financial institution server 12 desired by the information providing user in accordance with the operation of the information providing user.

In step S13, the control unit 51 of the financial institution server 12 transmits the financial transaction information to the user terminal 11 of the information providing user who has entered into the PFM contract. At this time, the control unit 51 also transmits credibility guarantee information for guaranteeing credibility of the financial transaction information to the user terminal 11.

The credibility guarantee information is, for example, a name of a financial institution that provides financial transaction information or rating information of the financial institution. The profit management unit 43 receives the financial transaction information and the credibility guarantee information provided from the financial institution server 12 of the financial institution that has entered into the PFM contract, and manages the financial transaction information and the credibility guarantee information.

In step S14, in a case where the information providing user agrees to provide the personal information regarding the financial transaction information, the information provision agreement unit 42 of the user terminal 11 generates information regarding the agreement. At that time, the information provision agreement unit 42 generates attribute information of the information providing user and information regarding selection of a disclosure destination in accordance with the operation of the information providing user.

In step S15, the information provision agreement unit 42 of the user terminal 11 transmits information regarding the agreement to the financial institution server 12 of the financial institution that has entered into the PFM contract.

In step S16, the information provision agreement unit 42 of the user terminal 11 transmits the information regarding the agreement to the information bank/asset management server 13. At that time, the information regarding the selection of the disclosure destination and the attribute information of the information providing user generated in step S14 are transmitted to the information bank/asset management server 13 as the related information of the financial transaction information.

In step S17, in a case of receiving the information regarding the agreement transmitted from the user terminal 11, the control unit 51 of the financial institution server 12 extracts the financial transaction information agreed by the information providing user from the financial transaction information DB 52. The control unit 51 transmits the extracted financial transaction information to the information bank/asset management server 13. Note that, at this time, the credibility guarantee information is also transmitted to the information bank/asset management server 13 as the related information of financial transaction information.

In step S18, the information management unit 62 of the information bank/asset management server 13 manages, as the asset management information, the received information regarding the agreement, the financial transaction information of the information providing user, and the related information of the financial transaction information including the attribute information of the information providing user, the information regarding the selection of the disclosure destination, the credibility guarantee information, and the like. At this time, the information management unit 62 registers and manages the asset management information in the asset management information DB 71 including personal information and the asset management information DB 72 not including personal information depending on presence or absence of the personal information.

In step 19 of Fig. 10, the control unit 81 of the service business server 14 requests the information bank/asset management server 13 to provide the asset management information. In addition, the control unit 81 provides the information bank/asset management server 13 with data of a desired advertisement image stored in the advertisement management DB 83. At that time, the control unit 81 performs processing of paying the advertisement usage fee to the information bank/asset management server 13.

In step S20, the information providing unit 64 of the information bank/asset management server 13 transmits asset management information and credibility guarantee information in a range desired by the service provider who has entered into the contract from among the asset management information managed by the information management unit 62. Note that, at that time, the information providing unit 64 provides the asset management information of the information providing user who has selected the service provider as the disclosure destination on the basis of the information regarding the selection of the disclosure destination.

The control unit 81 of the service business server 14 stores the asset management information transmitted from the information bank/asset management server 13 in the BigData management DB 82.

In step S21, the control unit 81 of the service business server 14 performs processing of paying a usage fee for the received asset management information to the information bank/asset management server 13.

The information providing unit 64 of the information bank/asset management server 13 performs processing of receiving the usage fee from the service business server 14.

In step S22, the UI generation unit 63 of the information bank/asset management server 13 generates a UI of a browsing page of the asset management information and manages information regarding the generated UI. In addition, the browsing information management unit 67 manages information (the number of times of browsing and the number of reviews) regarding browsing of the asset management information of the information bank/asset management server 13.

In step S23, the control unit 91 of the user terminal 15 accesses the information bank/asset management server 13 in accordance with the operation of the browsing user. In response to this, information regarding the UI of the user registration page for viewing the asset management information is transmitted from the information bank/asset management server 13. The control unit 91 receives the information regarding the UI of the user registration page for the browsing of the asset management information, and causes the display control unit 92 to display a UI screen corresponding to the received information regarding the UI. In response to the operation of the browsing user, the control unit 91 transmits the attribute information and the like of the browsing user to the information bank/asset management server 13 together with the user registration request. As a result, user registration of the browsing user is performed in the information bank/asset management server 13.

The browsing user management unit 66 of the information bank/asset management server 13 performs user registration processing in response to a request transmitted from the user terminal 15, and manages the attribute information and the like of the browsing user who has performed the user registration.

In step S24, the control unit 91 of the user terminal 15 accesses the information bank/asset management server 13 and makes a request to browse a desired browsing page of the asset management information. Note that the information bank/asset management server 13 may perform charging or the like for each browsing page, for example, in accordance with the situation.

In step S25, the UI generation unit 63 of the information bank/asset management server 13 transmits the information regarding the UI of the browsing page desired by the browsing user to the user terminal 15. Note that, at that time, the browsing information management unit 67 updates information regarding browsing of the asset management information of the information bank/asset management server 13.

The display control unit 92 of the user terminal 15 receives the information regarding the UI of the browsing page transmitted from the information bank/asset management server 13, and controls the display of the UI screen corresponding to the received information regarding the UI.

In step S26, the profit return management unit 68 of the information bank/asset management server 13 obtains the profit to be returned to the information providing user in accordance with, for example, the income (usage fee) from the service provider due to the use of the asset management information and the usage status (the number of reviews or the number of browses) of the UI of the browsing page by the browsing user. The profit return management unit 68 transmits the information regarding the obtained profit to the user terminal 11 of the information providing user. The profit management unit 43 of the user terminal 11 receives the information regarding the profit transmitted from the information bank/asset management server 13, and manages the profit of the information providing user obtained by provision of the information or the like.

### <Configuration of Asset Management Information>

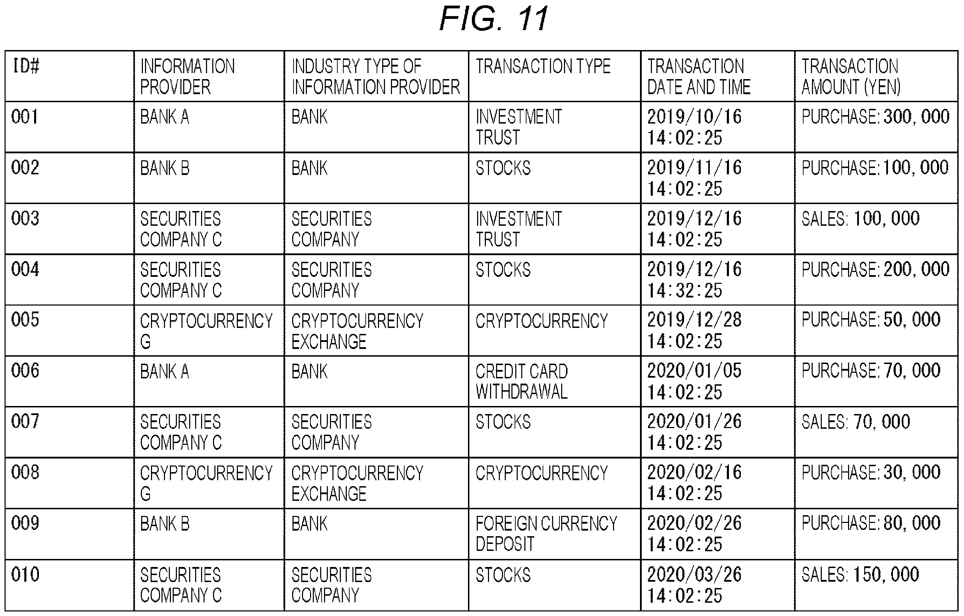

Fig. 11 is a diagram illustrating a configuration example of the asset management information managed by the information bank/asset management server 13. In Fig. 11, information of one information providing user is illustrated, but actually, information of other information providing users is also managed in a similar manner.

The asset management information includes an ID number (ID #), an information provider, an industry type of the information provider, a transaction type, a transaction date and time, and a transaction amount (yen) .

In the asset management information with the ID number of 001, the information provider is the bank A, the industry type of the information provider is the bank, the transaction type is an investment trust, the transaction date and time is 2019/10/16 14:02:25, and the transaction amount is 300,000 yen for purchase.

In the asset management information with the ID number of 002, the information provider is the bank B, the industry type of the information provision is the bank, the transaction type is stocks, the transaction date and time is 2019/11/16 14:02:25, and the transaction amount is 100,000 yen for purchase.

In the asset management information with the ID number of 003, the information provider is the securities company C, the industry type of the information provider is the securities company, the transaction type is the investment trust, the transaction date and time is 2019/12/16 14:02:25, and the transaction amount is 100,000 yen in sales.

In the asset management information with the ID number of 004, the information provider is the securities company C, the industry type of the information provider is the securities company, the transaction type is the stocks, the transaction date and time is 2019/12/16 14:32:25, and the transaction amount is 200,000 yen for purchase.

In the asset management information with the ID number of 005, the information provider is the cryptocurrency G, the industry type of the information provider is a cryptocurrency exchange, the transaction type is a cryptocurrency, the transaction date and time is 2019/12/28 14:02:25, and the transaction amount is 50,000 yen for purchase.

In the asset management information with the ID number of 006, the information provider is the bank A, the industry type of the information provider is the bank, the transaction type is credit card withdrawal, the transaction date and time is 2020/01/05 14:02:25, and the transaction amount is 70,000 yen for purchase.

In the asset management information with the ID number of 007, the information provider is the securities company C, the industry type of the information provider is the securities company, the transaction type is the stocks, the transaction date and time is 2020/01/26 14:02:25, and the transaction amount is 70,000 yen in sales.

In the asset management information with the ID number of 008, the information provider is the cryptocurrency G, the industry type of the information provider is the cryptocurrency exchange, the transaction type is the cryptocurrency, the transaction date and time is 2020/02/16 14:02:25, and the transaction amount is 30,000 yen for purchase.

In the asset management information with the ID number of 009, the information provider is the bank B, the industry type of the information provider is the bank, the transaction type is foreign currency deposit, the transaction date and time is 2019/02/26 14:02:25, and the transaction amount is 80,000 yen for purchase.

In the asset management information with the ID number of 010, the information provider is the securities company C, the industry type of the information provider is the securities company, the transaction type is the stocks, the transaction date and time is 2020/03/26 14:02:25, and the transaction amount is 150,000 yen in sales.

### <UI Screen Example of Browsing Page>

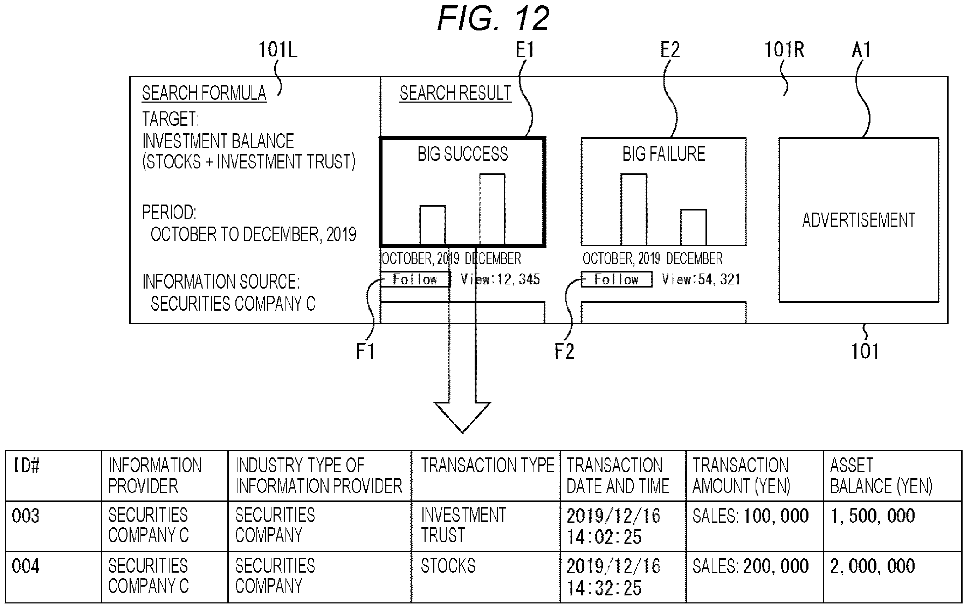

Fig. 12 is a diagram illustrating an example of the UI screen of the browsing page of the asset management information.

In Fig. 12, a UI screen 101 of a browsing page is displayed. The UI screen 101 is an example of the UI screen of the browsing page of the asset management information provided to the browsing user in step S25 of Fig. 10 described above, for example. The information regarding the UI transmitted from the information bank/asset management server 13 in response to the browsing request from the user terminal 15 by the operation of the browsing user is displayed on a display or the like constituting the output unit 27 of the user terminal 15.

The UI screen 101 of the browsing page includes a search formula screen 101L that displays information regarding a search formula (search condition) and a search result screen 101R that displays information regarding a search result matching the search formula.

On the search formula screen 101L, a target, a period, and an information source (information provider) set in the search formula are presented. In the case of Fig. 12, the search formula screen 101L presents that the target of the search formula is the investment balance (stocks + investment trust), the period is October to December, 2019, and the information source is the securities company C.

A graph E1, a graph E2, a Follow button F1, a Follow button F2, and an advertisement A1 are displayed on the search result screen 101R.

The graph E1 is a graph illustrating a transition of an investment balance in an investment success case where the investment balance increased the most in October to December, 2019. That is, successful investment means that the investment balance has increased. The graph E2 is a graph illustrating a transition of an investment balance in an investment failure case where the investment balance decreased the most in October to December 2019. That is, failure investment means that the investment balance has decreased.

The Follow button F1 is a button for following an information providing user of the investment case of the graph E1. By operating the Follow button, the browsing user can register a target information providing user in his/her account. As a result, the browsing user can continuously read a new post (asset management information) of the target information providing user. 12,345, which is the number of times the graph E1 has been browsed, is illustrated as View on the right side of the Follow button F1.

The Follow button F2 is a Follow button for following an information providing user of the investment case of the graph E2. 54,321, which is the number of times the graph E2 has been browsed, is illustrated as View on the right side of the Follow button F2.

The advertisement A1 is an advertisement image corresponding to data provided by a service business server 14 of a service provider who has entered into a contract for advertisement utilization in advance by performing processing with the information bank/asset management server 13. For example, a page introducing a product indicated by the advertisement may be displayed by pressing the advertisement A1.

In Fig. 12, the graph E1 is surrounded by a thick line. This indicates that the graph E1 is selected by the operation of the browsing user.

By selecting the graph E1, detailed asset management information of the investment case represented by the graph E1 is displayed as indicated by a thick arrow. That is, in Fig. 12, among the asset management information of Fig. 11, the period is October to December, 2019, and only the asset management information of one information providing user provided from the securities company C as the information source is illustrated.

Note that, although not illustrated, when the graph E2 is selected, the detailed asset management information of the investment case represented by the graph E2 is displayed similarly to the case of the graph E1.

### <Example of UI Screen>

Next, an example of the UI screen of a page displayed in a predetermined step of the flowchart described above will be described with reference to Figs. 9 and 10.

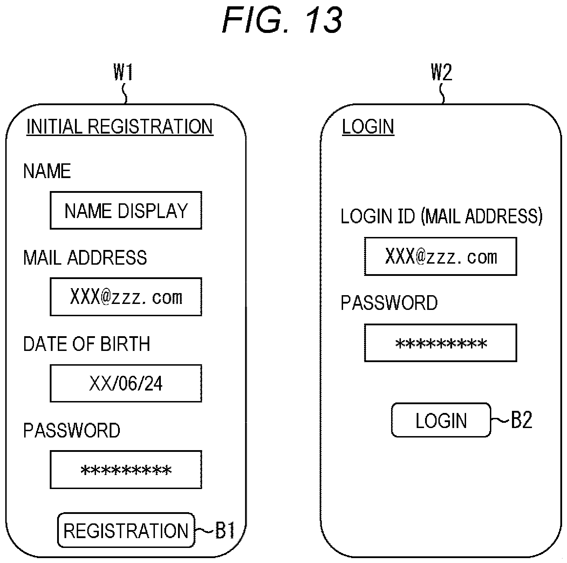

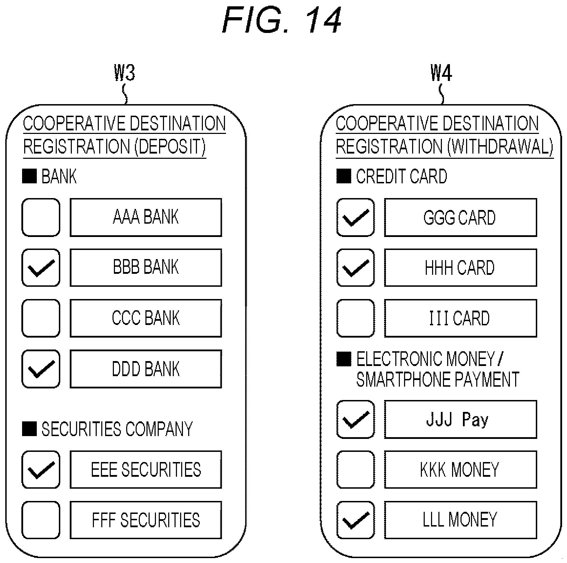

Figs. 13 and 14 are diagrams illustrating examples of the UI screen in the PFM contract in step S12 of Fig. 9. The information regarding the UI is generated by the control unit 51 of the financial institution server 12, for example.

Fig. 13 illustrates a UI screen W1 of an initial registration page and a UI screen W2 of a login page.

The UI screen W1 is an example of a UI screen of the initial registration page of the PFM contract. On the UI screen W1, a title indicating the "initial registration" page, a name input field, a mail address input field, a birth date input field, a password input field, and a registration button B1 are displayed in order from the top.

The information providing user inputs his/her name, his/her mail address, his/her date of birth, and a password in each input field of the UI screen W1, and presses the registration button B1. In response to the input of the information providing user, the user terminal 11 transmits the input information to the financial institution server 12 as attribute information of the user. Accordingly, the initial registration of the PFM contract is completed.

The UI screen W2 is an example of a UI screen of the login page of the PFM contract. On the UI screen W2, a title indicating the "login" page, an input field for inputting a login ID (mail address), an input field of a password registered on the initial registration page, and a login button B2 are displayed in order from the top.

The information providing user inputs the mail address and the password in each input field of the UI screen W2, and presses the login button B2. In response to the input by the information providing user, the user terminal 11 transmits the input information to the financial institution server 12 as login information. As a result, the login to the site of the PFM contract by the information providing user is completed.

Fig. 14 illustrates a UI screen W3 of a cooperative destination registration (deposit) page and a UI screen W4 of a cooperative destination registration (withdrawal) page.

The UI screen W3 is an example of a UI screen of the cooperative destination registration (deposit) page of the PFM contract. The cooperative destination registration (deposit) page is a page in which the information providing user registers the financial institution that performs the PFM contract for the deposit information. On the UI screen W3, in order from the top, a title indicating the "cooperative destination registration (deposit)" page, four check boxes for selecting a bank as a cooperative destination, a name of each bank corresponding to each check box, two check boxes for selecting a securities company as a cooperative destination, and a name of each securities company corresponding to each check box are displayed.

In the example of Fig. 14, an AAA bank, a BBB bank, a CCC bank, a DDD bank are presented as options of banks, and the check boxes corresponding to the BBB bank and the DDD bank are checked. In addition, EEE securities and FFF securities are presented as options for securities companies, and the check box corresponding to the EEE securities is checked.

By checking a check box displayed on the UI screen W3 as described above, the information providing user selects a desired financial institution from among the presented banks and securities companies as the cooperative destination of the deposit. The information selected by the information providing user is transmitted by the user terminal 11 to the financial institution server 12 of the financial institution selected as the cooperative destination of the deposit. Note that since they are check boxes, a plurality of financial institutions can be selected as the cooperative destination of the deposit. The same applies to the following examples of the UI screen.

The UI screen W4 is an example of a UI screen of the cooperative destination registration (withdrawal) page of the PFM contract. The cooperative destination registration (withdrawal) page is a page in which the information providing user registers a financial institution that performs a PFM contract for the withdrawal information. On the UI screen W4, a title indicating the "cooperative destination registration (withdrawal)" page, three check boxes for selecting a credit card as a cooperative destination, a name of each credit card corresponding to each check box, three check boxes for selecting electronic money/smartphone payment as a cooperative destination, and a name of each electronic money/smartphone payment corresponding to each check box are displayed in order from the top.

In the example of Fig. 14, a GGG card, an HHH card, and an III card are presented as options of the credit card, and the check boxes corresponding to the GGG card and the HHH card are checked. Furthermore, for example, JJJ Pay, KKK money, and LLL money are presented as options of electronic money/smartphone payment, and the check boxes corresponding to JJJ Pay and LLL money are checked.

By checking a check box displayed on the UI screen W4 as described above, the information providing user selects a desired financial institution from among the credit card and the electronic money/smartphone payment as the cooperative destination of the withdrawal. The information selected by the information providing user is transmitted by the user terminal 11 to the financial institution server 12 of the financial institution selected as the cooperative destination of the withdrawal.

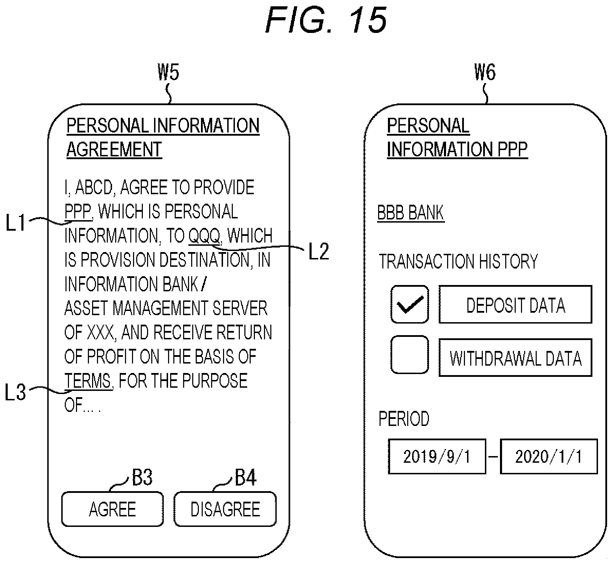

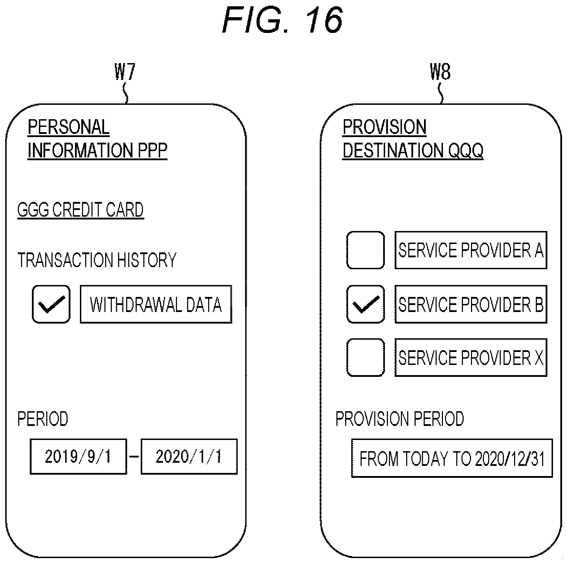

Figs. 15 and 16 are diagrams illustrating an example of the UI screen in the agreement of the personal information provision in step S14 of Fig. 9. The information regarding the UI is generated by, for example, the UI generation unit 63 of the information bank/asset management server 13.

Fig. 15 illustrates a UI screen W5 of a personal information agreement (input) page for inputting the personal information agreement and a UI screen W6 of a personal information input page for inputting the details of the personal information to be provided.

The UI screen W5 is an example of a UI screen of the personal information agreement page. On the UI screen W5, a title indicating the "personal information agreement" page, an agreement content indicating the content of agreement of the personal information, an agree button B3, and a disagree button B4 are displayed in order from the top.

In the agreement content, "I, ABCD (user name), agree to provide PPP, which is personal information, to QQQ, which is provision destination, in the information bank/fund management server of XXX, and receive return of profit on the basis of terms, for the purpose of ..." is written.

PPP in the consent form of Fig. 15 is underlined and is a link L1 to the UI screen W6 (Fig. 15) or a UI screen W7 (Fig. 16) for inputting personal information. In a case where the link L1 is pressed by the information providing user, the UI screen W6 (Fig. 15) or the UI screen W7 (Fig. 16) of the personal information input page is displayed. QQQ in the consent form of Fig. 15 is underlined and is a link L2 to a UI screen W8 (Fig. 16) for inputting the provision destination information. In a case where the link 2 is pressed by the information providing user, the UI screen W8 (Fig. 16) of a provision destination information input page is displayed.

The terms in the consent form of Fig. 15 are underlined and are a link L3 to a UI screen for confirming the terms. When the link 3 is pressed by the information providing user, the UI screen for confirming the terms is displayed.

In a case where the information providing user presses the agree button B3 displayed on the UI screen W5 after the information to be input is input on the screen linked by the link L1 and the link L2 in the consent form of Fig. 15, the information provision agreement unit 42 of the user terminal 11 agrees to provide the personal information regarding the financial transaction information and generates the information regarding the agreement. Note that, at that time, the input attribute information of the information providing user and the information regarding the selection of the disclosure destination are also generated.

As described above, the generated information is transmitted to the financial institution server 12 of the financial institution that is the provider of the information agreed to be provided by the information providing user and the information bank/asset management server 13.

In a case where the disagree button B4 displayed on the UI screen W5 is pressed by the information providing user, the display of the display constituting the output unit 37 returns from the UI screen W5 to, for example, the previous UI screen.

The UI screen W6 is an example of a UI screen of the personal information input page. On the UI screen W6, a title indicating a page for inputting "personal information PPP", a description indicating that the personal information is information of the BBB bank, two check boxes for selecting a data type of a transaction history, and a type of each data corresponding to each check box are displayed in order from the top. The type of data is deposit data or withdrawal data. Below the check box, a period input field for inputting a period of data to be provided is displayed.

In the case of Fig. 15, the check box corresponding to the deposit data on the UI screen W6 is checked, and 2019/9/1 to 2020/1/1 are input in the input field of the period. That is, on the UI screen W6d, provision of the information of the deposit data in the periods of 2019/9/1 to 2020/1/1 among the deposit data of the BBB bank as the transaction history is input as the personal information.

In Fig. 16, the UI screen W7 of the personal information input page and the UI screen W8 of the provision destination information input page for inputting the provision destination of the personal information are illustrated.

The UI screen W7 is an example of a UI screen of the personal information input page. On the UI screen W7, a title indicating a page for inputting "personal information PPP", a description indicating that the personal information is the information of the GGG credit card, one check box for selecting a data type of a transaction history, and a type of data corresponding to the check box are displayed in order from the top. The type of data is withdrawal data. Below the check box, a period input field for inputting a period of data to be provided is displayed.

In the case of Fig. 16, the check box corresponding to the withdrawal data on the UI screen W7 is checked, and 2019/9/1 to 2020/1/1 are input in the input field of the period. That is, on the UI screen W7, provision of information of withdrawal data in the periods of 2019/9/1 to 2020/1/1 among the withdrawal data of the GGG credit card as the transaction history is input as the personal information.

The UI screen W8 is an example of a UI screen of the personal information input page. On the UI screen W8, a title indicating a page for selecting the "provision destination QQQ", and three check boxes and the names of the service providers corresponding to the respective check boxes as a list for selecting a service provider as the provision destination are displayed in order from the top. The names of the service providers are a service provider A, a service provider B, and a service provider X. Below the radio button, a period input field for inputting a period of data to be provided is illustrated.

In the case of Fig. 16, the check box corresponding to the service provider B on the UI screen W8 is checked, and "from today to 2020/12/31" is input in the period input field. That is, on the UI screen W8, provision of information "from today to 2020/12/31" to the service provider B among the service providers is input as the provision destination of the personal information.

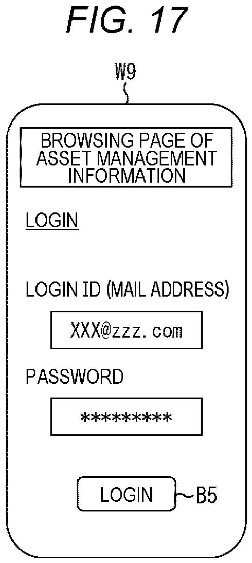

Fig. 17 is a diagram illustrating an example of a UI screen on which login is performed in order to browse the asset management information in step S24 of Fig. 10. The information regarding the UI is generated by, for example, the UI generation unit 63 of the information bank/asset management server 13.

In Fig. 17, a UI screen W9 of a login page after user registration is illustrated.

The UI screen W9 is an example of a UI screen of the login page for browsing the asset management information. On the UI screen W9, a title indicating the "login" page, an input field for inputting a login ID (mail address), an input field of a password registered in advance, and a login button B5 are displayed in order from the top.

The browsing user inputs the mail address and the password in each input field of the UI screen W9, and presses the login button B5. In response to these operations of the browsing user, the user terminal 15 transmits the input information to the information bank/asset management server 13 as login information. As a result, the login to the browsing of the asset management information by the browsing user is completed.

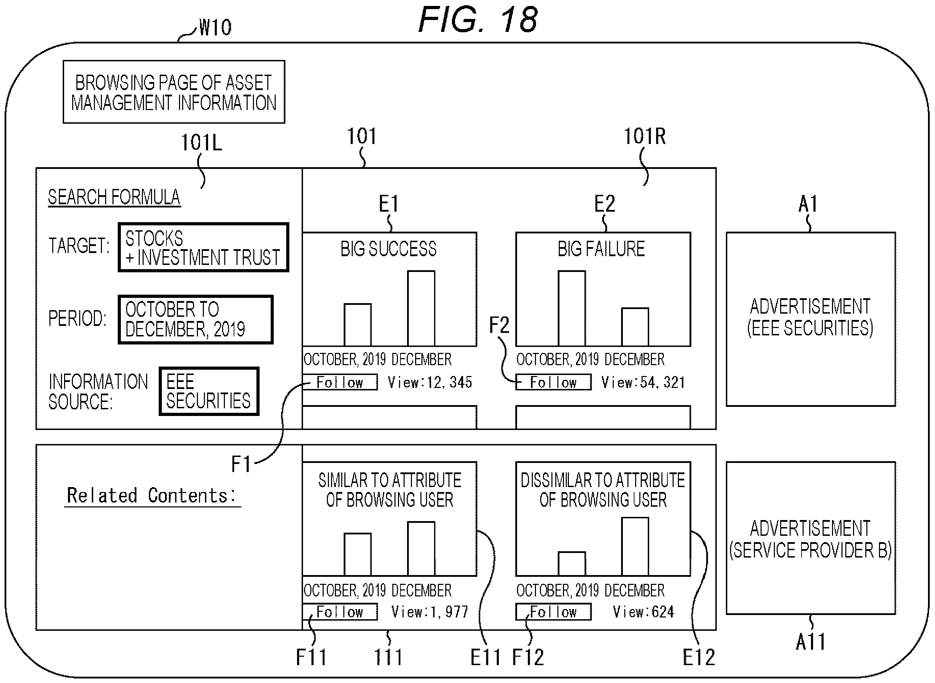

Fig. 18 is a diagram illustrating an example of the UI screen of the browsing page of the asset management information provided in step S25 of Fig. 10. Note that portions corresponding to those in Fig. 12 are denoted by the same reference numerals, and description thereof will be omitted.

The UI screen W10 is a modification of the UI screen 101 of the browsing page of the asset management information of Fig. 12. On the UI screen W10, a title indicating the browsing page of the asset management information, a UI screen 101 for browsing the asset management information, and a UI screen 111 indicating content related to the browsing user are displayed.

On the UI screen 111, a graph E11 illustrating a transition of an investment balance in an investment case of an information providing user having an attribute similar to that of the browsing user is displayed as the content related to the browsing user. The attribute being similar means that, for example, age, gender, financial institution with business, and the like are common.

Below the graph E11, a Follow button F11, which is a button for following the information providing user of the investment case of the graph E11, is displayed. On the right side of the Follow button F11, 1,977, which is the number of times the graph E11 has been browsed, is illustrated as View.

The UI screen 111 further displays a graph E12 illustrating a transition of an investment balance in an investment case of an information providing user having an attribute not similar to that of the browsing user. Below the graph E12, a Follow button F12, which is a button for following the information providing user of the investment case of the graph E12, is displayed. On the right side of the Follow button F12, 624, which is the number of times the graph E12 has been browsed, is illustrated as View.

In a case where any one of the graph E1, the graph E2, the graph E11, and the graph E12 is selected by the operation of the browsing user, the detailed asset management information of the investment case represented by the corresponding graph is displayed as described above with reference to Fig. 12.

Note that, in Fig. 18, the advertisement A1 is displayed on the right side of the UI screen 101. An advertisement image of the EEE securities, which is one of the financial institutions, is displayed in the advertisement A1. An advertisement A11 is displayed on the right side of the UI screen 111. An advertisement image of the service provider B is displayed in the advertisement A11.

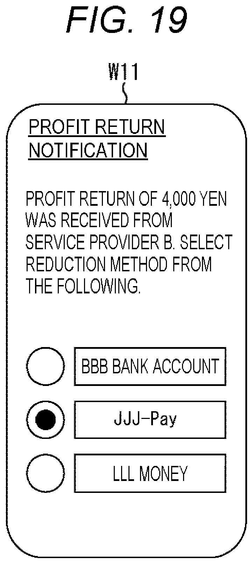

Fig. 19 is a diagram illustrating an example of the UI screen of a notification of the profit return of the asset management information in step S26 of Fig. 10. The information regarding the UI is generated by, for example, the UI generation unit 63 of the information bank/asset management server 13.

Fig. 19 illustrates a UI screen W11 for the notification of profit return.

The UI screen W11 is an example of a UI screen of a notification page of the profit return of the asset management information. On the UI screen W11, a title indicating a page related to the "profit return notification", details of the profit return, three radio buttons for selecting a profit return method, and the name of the financial institution corresponding to each radio button are displayed in order from the top. The names of the financial institutions are, for example, the BBB bank account, JJJ-Pay, and LLL money.

The details of the profit return are described as follows. "Profit return of 4,000 yen was received from the service provider B. Select the reduction method from the following".

In Fig. 19, the radio button corresponding to JJJ-Pay is selected. In response to the operation of the information providing user, the user terminal 11 transmits, to the information bank/asset management server 13, information regarding profit indicating that the profit return method is "JJJ-Pay".

By configuring the asset management information providing system 1 as described above, the browsing user can easily acquire information regarding individual asset management. As a result, the browsing user can refer to an investment method in individual asset management. On the other hand, the information providing user can obtain a profit return by providing information regarding individual asset management within a range allowed by the information providing user.

### <2. Second Embodiment (Exchange between Information Providing User and Browsing User)>

The UI screen of the browsing page of the information bank/asset management server 13 is provided with the Follow button F1 as described above with reference to Fig. 12. The Follow button provided in a general SNS or the like is a button for registering a target user in an own account so that a new post of the target user can be continuously read.

In the second embodiment of the present technology, by pressing the Follow button, the user terminal 15 of the browsing user and the user terminal 11 of the information providing user are connected at a place (for example, on F_SNS described above) provided by the information bank/asset management server 13, and the browsing user and the information providing user can perform exchange (communication) with each other by chatting or the like.

### <Connection Processing between User Terminal of Information Providing User and User Terminal of Browsing User>

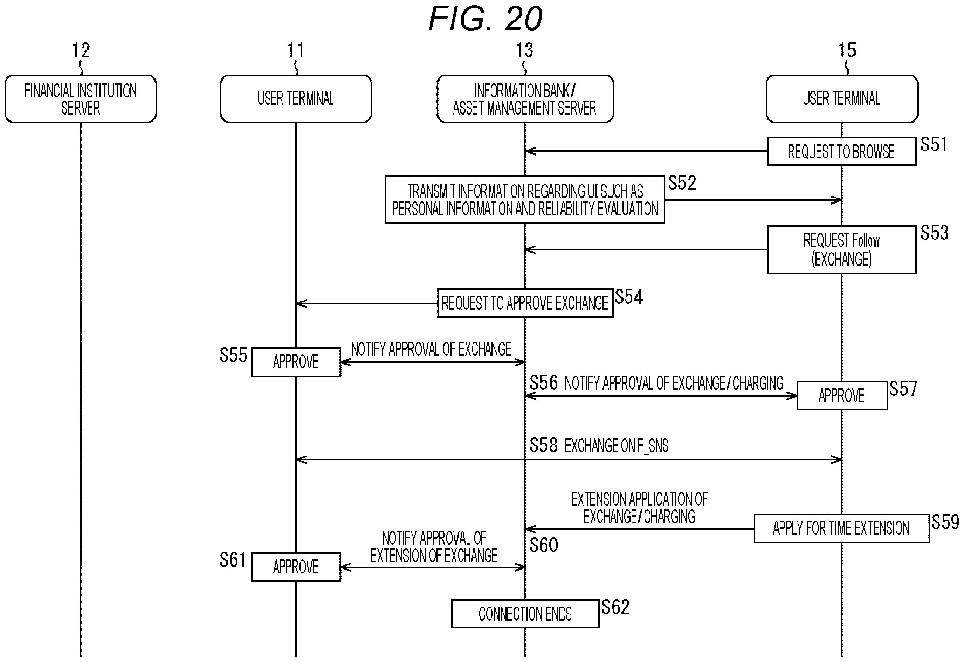

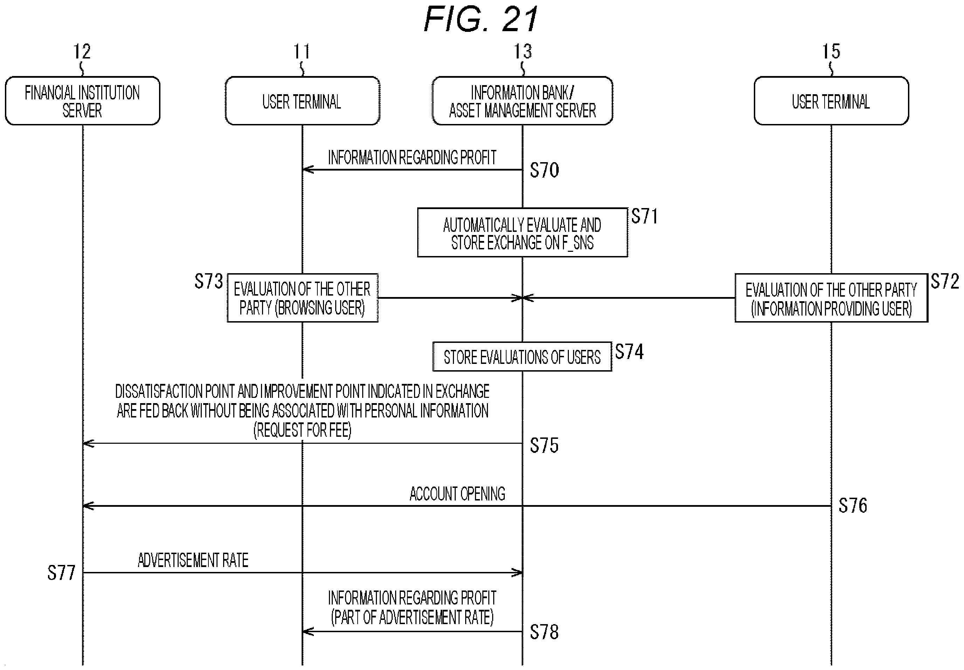

Figs. 20 and 21 are flowcharts for explaining connection processing between the user terminal 11 of the information providing user and the user terminal 15 of the browsing user by the information bank/asset management server 13.

The browsing page of the information bank/asset management server 13 includes, in addition to the above-described browsing page of the asset management information, a browsing page of attribute information, reliability evaluation, and the like of the information providing user in the asset management information.

In step S51, the control unit 91 of the user terminal 15 accesses the information bank/asset management server 13, and makes a request to browse a browsing page such as asset management information, or attribute information and reliability evaluation of the information providing user.

In step S52, the UI generation unit 63 of the information bank/asset management server 13 transmits information regarding the UI of the browsing page desired by the browsing user to the user terminal 15.

The display control unit 92 of the user terminal 15 receives the information regarding the UI transmitted from the information bank/asset management server 13, and controls the display of the UI screen of the browsing page corresponding to the received information regarding the UI.

In a case where the browsing user desires to browse the personal information and the reliability evaluation of the information providing user and exchange with the information providing user, the browsing user presses the Follow button for directly exchanging with the information providing user on the UI screen. In step S53, in response to the pressing of the Follow button by the information providing user, the user terminal 15 requests the information bank/asset management server 13 to perform exchange with the information providing user.

For example, in a case where the information providing user has a transaction record with a financial institution for which the browsing user requires information, a long transaction period, knowledge, or a record in good faith corresponding to a question being exchanged with the browsing user, or the like, the browsing user presses the Follow button for performing exchange with the information providing user.

In step S54, in a case where the exchange is requested from the user terminal 15 of the browsing user, the connection control unit 69 of the information bank/asset management server 13 requests the user terminal 11 of the information providing user to approve the exchange with the browsing user on the F_SNS, for example.

In step S55, in a case where the information providing user accepts the request for approval of the exchange with the browsing user, the control unit 41 of the user terminal 11 notifies the information bank/asset management server 13 of the approval of the exchange.

In step S56, in a case where the request for exchange is approved by the user terminal 11 of the information providing user, the connection control unit 69 of the information bank/asset management server 13 notifies the user terminal 15 of the browsing user of the approval of the exchange of the information providing user and charging for the exchange.

In step S57, the user terminal 15 of the browsing user approves the notification. Correspondingly, in step S58, since the user terminal 11 and the user terminal 15 are connected, the information providing user and the browsing user directly perform exchange on the F_SNS for a certain period of time (for example, 10 minutes) by using a tool such chatting. Here, for example, on the UI screen of the F_SNS on the browsing user side, an extension button for applying for extension of the exchange is displayed together with the charging information for the extension.

In step S59, in a case where the browsing user wants to continue the exchange with the information providing user, the browsing user presses the extension button described above before the specified exchange time ends. In response to this, the user terminal 15 transmits information indicating an extension application for the exchange with the information providing user to the information bank/asset management server 13. At that time, information indicating approval of charging for the extension by the browsing user is also transmitted.

In step S60, the connection control unit 69 of the information bank/asset management server 13 transmits information indicating the extension application for the exchange to the user terminal 11.

In step S61, in a case where the information providing user approves the extension application for the exchange with the browsing user, the control unit 41 of the user terminal 11 notifies the information bank/asset management server 13 of the approval of the extension of the exchange. As a result, the exchange between the information providing user and the browsing user on the F_SNS is extended for a certain period of time.

In step S62, in a case where the connection control unit 69 of the information bank/asset management server 13 determines that the certain period of time has elapsed, the connection between the user terminal 11 of the information providing user and the user terminal 15 of the browsing user is terminated.

In step S70 of Fig. 21, the profit return management unit 68 of the information bank/asset management server 13 transmits information regarding the profit to the user terminal 11 of the information providing user who has performed exchange with the browsing user. The profit management unit 43 of the user terminal 11 receives the information regarding the profit transmitted from the information bank/asset management server 13.

In step S71, the browsing information management unit 67 of the information bank/asset management server 13 automatically evaluates and stores the exchange between the information providing user and the browsing user on the F_SNS.

For example, when the exchange on the F_SNS is completed, the UI generation unit 63 of the information bank/asset management server 13 transmits information regarding the UI for inputting the evaluation of the other party.

In step S72, the control unit 91 of the user terminal 15 transmits the evaluation of the other party (information providing user) input in accordance with the operation of the browsing user to the information bank/asset management server 13.

Further, in step S73, the control unit 41 of the user terminal 11 transmits the evaluation of the other party (browsing user) input in accordance with the operation of the information providing user to the information bank/asset management server 13.

In step S74, the browsing information management unit 67 of the information bank/asset management server 13 stores the evaluation of the browsing user from the user terminal 11 and the evaluation of the information providing user from the user terminal 15.

In step S75, the control unit 61 of the information bank/asset management server 13 transmits the dissatisfaction point, the improvement point, and the like with respect to the financial institution that have been indicated in the exchange to the financial institution server 12 as feedback information without associating the dissatisfaction point, the improvement point, and the like with the personal information. At that time, a request for a fee for the feedback information is also transmitted.

For example, link information to a site for opening an account of a predetermined financial institution is provided on a UI screen for inputting evaluation of the other party. After the exchange, the browsing user who intends to open an account in a predetermined financial institution presses the link information provided on the UI screen.

In step S76, the control unit 91 of the user terminal 15 accesses the financial institution server 12 corresponding to the financial institution in accordance with the operation of the browsing user, and performs account opening processing.

In step S77, in a case of the account opening from the browsing user who has browsed the asset management information of the information bank/asset management server 13, the financial institution server 12 transmits an advertisement rate to the information bank/asset management server 13.

In step S78, in a case where the browsing user who has opened the account is the user who has performed exchange with the information providing user, the profit return management unit 68 of the information bank/asset management server 13 transmits information regarding the profit return to the user terminal 11 of the information providing user by using a part of the advertisement rate as the profit return. The profit management unit 43 of the user terminal 11 receives the information regarding the profit transmitted from the information bank/asset management server 13.

As described above, the browsing user can directly hear the details of the financial institution, the PFM contract, the asset management, and the like from the information providing user. The information providing user can obtain a profit return as a reward for the exchange. The financial institution can obtain a new customer.

### <Example of UI Screen>

Next, an example of a UI screen of a page displayed in a predetermined step of the flowchart of the asset management information providing system described above with reference to Figs. 20 and 21 will be described. Note that, in the following UI screen, for example, an example is illustrated in which the information providing user and the browsing user consult about the opening of an account of the YY credit association, but the content of the exchange can be freely set between the users.

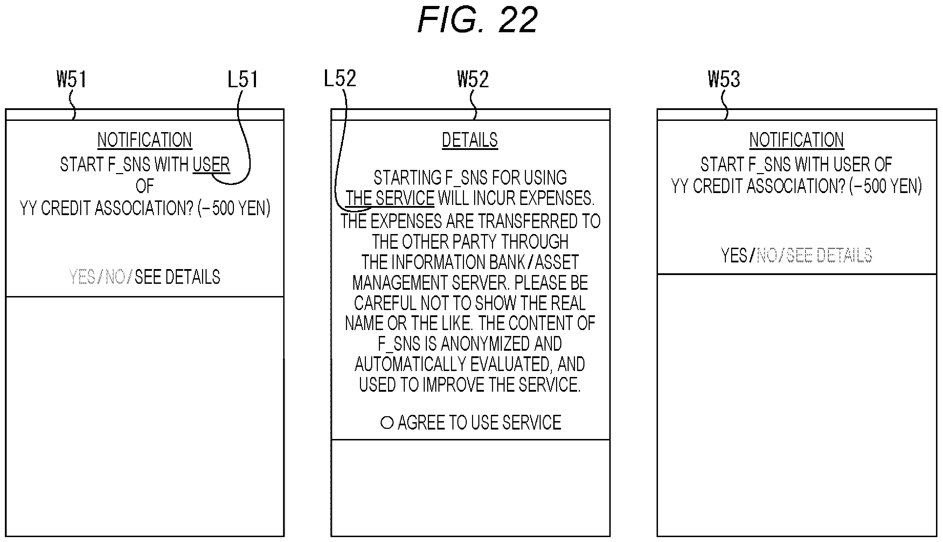

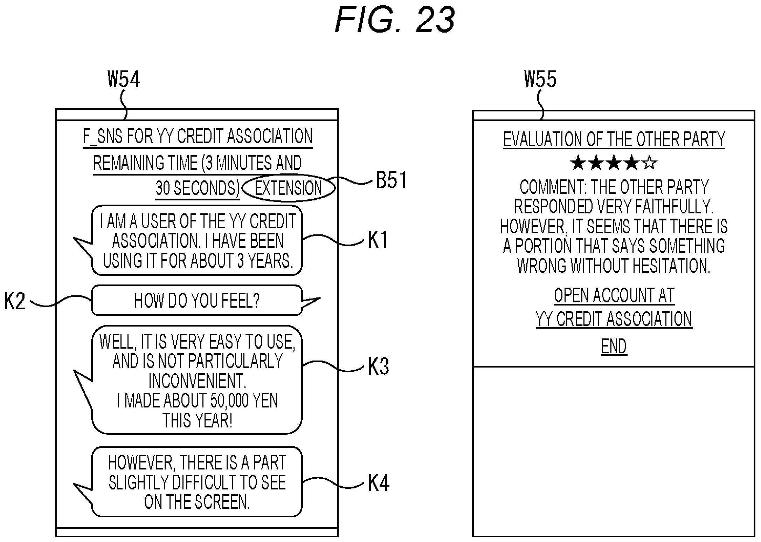

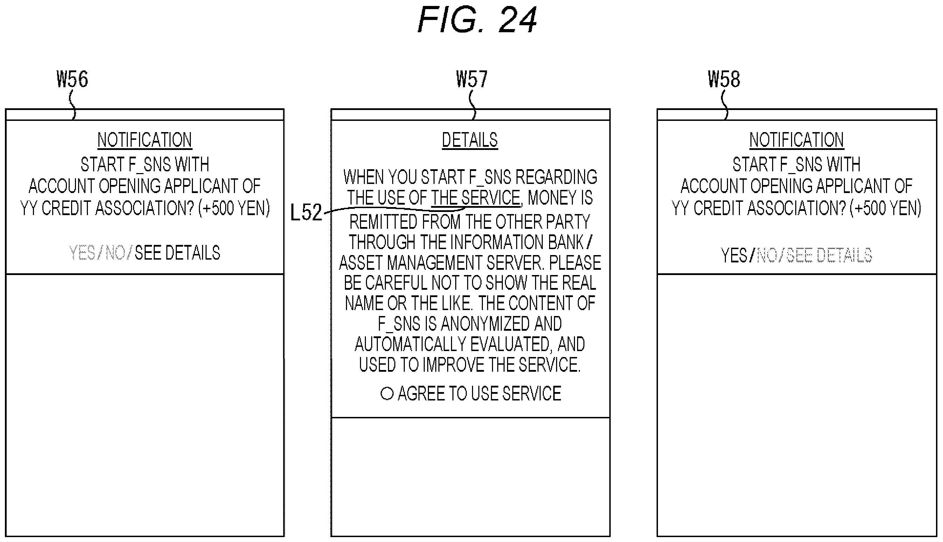

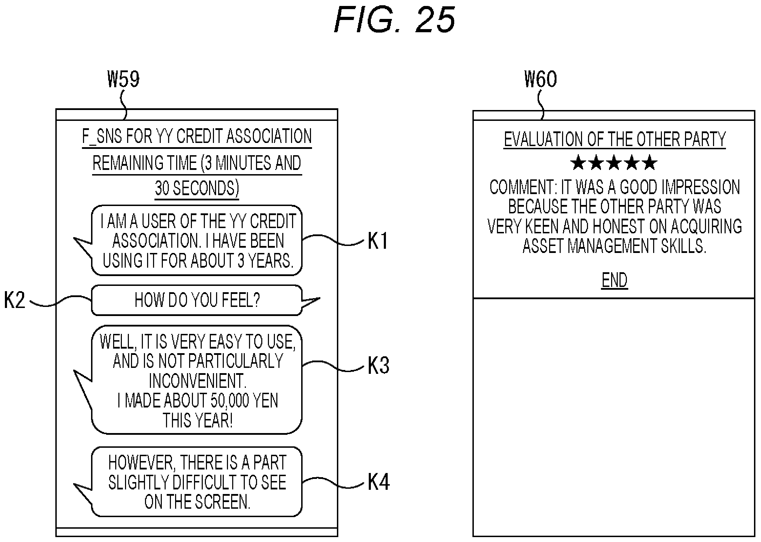

Note that Figs. 22 and 23 are UI screens presented to the browsing user, and Figs. 24 and 25 are UI screens presented to the information providing user.

Fig. 22 is a diagram illustrating an example of a UI screen notified from the information bank/asset management server 13 in step S56 of Fig. 20 and displayed on the user terminal 15 in step S57. The information regarding the UI is generated by, for example, the UI generation unit 63 of the information bank/asset management server 13.

In Fig. 22, a UI screen W51 of a notification page, a UI screen W52 of a detail page, and a UI screen W53 of the notification page are illustrated.

The UI screen W51 is an example of a UI screen of the notification page that notifies the user terminal 15 of the browsing user of the charging for the exchange with the information providing user. On the UI screen W51, a title indicating the "notification" page, the content of the notification, and three options (YES/NO/See details) are displayed in order from the top. Note that, in the UI screen W51, an example is illustrated in which the dark "See details" among the options is pressed by the browsing user.

As the content of the notification, "Start F_SNS with user of YY credit association? (-500 yen)" is indicated. The user of the YY credit association represents an information providing user. F_SNS represents exchange on the F_SNS. In addition, the user is underlined on the screen and is a link L51 to the UI screen indicating what kind of user the user is. When the browsing user presses the link L51, the UI screen indicating what kind of user the user is can be displayed.

By the browsing user pressing "YES" among the options, the exchange is started, and for example, the UI screen W54 of Fig. 23 is displayed. By the browsing user pressing "NO" among the options, the display returns to the UI screen or the like of the browsing page of the original asset management information. By the browsing user pressing "See details" among the options, the UI screen W52 is displayed, for example.

The UI screen W52 is an example of a UI screen of the detail page that displays details of the exchange with the information providing user with respect to the user terminal 15 of the browsing user. On the UI screen W52, a title indicating the "Details" page, the content of the details, and a radio button for indicating agreement on use of the service are displayed in order from the top.

The content of the details is as follows. "Starting F_SNS for using the service will incur expenses. The expenses are transferred to the other party through the information bank/asset management server. Please be careful not to show the real name or the like. The content of F_SNS is anonymized and automatically evaluated, and used to improve the service." The service is underlined on the screen and is a link L52 to a UI screen indicating what kind of service the service is. By the browsing user pressing the link L52, the UI screen indicating what kind of service it is can be displayed.

By the browsing user pressing the radio button, the agreement is accepted, and for example, the UI screen W53 of Fig. 22 is displayed.

The UI screen W53 is an example of the UI screen of the notification page that notifies the user terminal 15 of the browsing user of the charging for the exchange with the information providing user. Explanation of the same description as that of the UI screen W51 will be omitted. Note that the UI screen W53 illustrates an example in which a darker "YES" among the three options is pressed by the browsing user.

As illustrated in the UI screen W53, by the browsing user pressing "YES" among the options, F_SNS is started, and for example, the UI screen W54 in Fig. 23 is displayed.

Fig. 23 is a diagram illustrating an example of a UI screen displayed on the user terminal 15 while the information providing user and the browsing user perform exchange on the F_SNS in step S58 of Fig. 20 or when the exchange ends in step S62. The information regarding the UI is generated by, for example, the UI generation unit 63 of the information bank/asset management server 13.

In Fig. 23, the UI screen W54 of the F_SNS (exchange) page and a UI screen W55 of the evaluation display page of the other party are illustrated.

The UI screen W54 is an example of a UI screen of the F_SNS page on which the information providing user and the browsing user perform exchange on the F_SNS. On the UI screen W54, a title indicating an "F_SNS for YY credit association" page, a remaining time (3 minutes and 30 seconds), an extension button B51, and conversations K1 to K4 are displayed in order from the top. Among the conversations K1 to K4, the conversation K1, the conversation K3, and the conversation K4 are conversations of the information providing user, and the conversation K2 is a conversation of the browsing user.

For the conversation K1 of the information providing user: "I am a user of the YY credit association. I have been using it for about 3 years", the browsing user asks the conversation K2 "How do you feel?". For the conversation K2, the information providing user answers the conversation K3 "Well, it is very easy to use, and is not particularly inconvenient. I made about 50,000 yen this year!". Furthermore, the information providing user answers the conversation K4 "However, there is a part slightly difficult to see on the screen". Among the conversations K1 to K4, for example, the content of the conversation K4 is an impression on the financial institution. Therefore, in step S75 of Fig. 21, the content of the conversation K4 is transmitted as feedback information to the financial institution server 12 by the information providing unit 64 without being associated with the personal information.

In the UI screen W54, since the exchange ends when the remaining time (3 minutes and 30 seconds) elapses, the display changes from the UI screen W54 to the UI screen W55. In a case where the browsing user desires to continue the exchange, by pressing the extension button B51 provided on the UI screen W54, the extension is requested from the user terminal 15 to the user terminal 11 via the information bank/asset management server 13 in step S59 of Fig. 20. In a case where the requested extension is approved by the information providing user of the user terminal 11, the exchange time can be extended.

The UI screen W55 is an example of a UI screen of an evaluation input page for inputting evaluation to the other party (information providing user) who has performed the exchange. On the UI screen W55, a title indicating "evaluation of the other party" input page, a mark of a star indicating the evaluation to the other party with 5-level evaluation, a comment input field, and two options (link information to open account of the YY credit association or end) are displayed in order from the top.

In the star mark, four stars out of five stars are input as the evaluation of the other party. In the comment input field, the evaluation of the other party "The other party responded very faithfully. However, it seems that there is a portion that says something wrong without hesitation." is input.

In a case where the browsing user inputs the evaluation of the other party on the UI screen W55 and thereafter wants to open an account at the YY credit association, the browsing user presses link information to the account opening among options. In response to this, the screen transitions to the account opening page of the YY credit association as described above in step S76 of Fig. 21. As a result, the browsing user can efficiently open an account.

On the other hand, in a case where the end among the options is pressed by the browsing user, the exchange with the information providing user is ended.

Fig. 24 is a diagram illustrating an example of a UI screen notified from the information bank/asset management server 13 in step S54 of Fig. 20 and displayed on the user terminal 11 in step S55. The information regarding the UI is generated by, for example, the UI generation unit 63 of the information bank/asset management server 13.

In Fig. 24, a UI screen W56 of the notification page, a UI screen W57 of the detail page, and a UI screen W58 of the notification page are illustrated.

The UI screen W56 is an example of a UI screen of the notification page that notifies the user terminal 11 of the information providing user of a request for exchange with the browsing user. On the UI screen W56, a title indicating the "notification" page, the content of the notification, and the options (YES/NO/See details) are displayed in order from the top. Note that the UI screen W56 illustrates an example in which the browsing user presses "See details" displayed in dark among the three options.

As the content of the notification, "Start F_SNS with an account opening applicant of a oo credit association? (+ 500 yen)" is indicated. The account opening applicant of the oo credit association represents the browsing user. F_SNS represents exchange.

By the information providing user pressing "YES" among the options, F_SNS is started, and for example, a UI screen W59 in Fig. 25 is displayed. By the information providing user pressing "NO" among the options, the display returns to the UI screen or the like of the browsing page of the original asset management information. By the information providing user pressing "See details" among the options, the UI screen W57 is displayed, for example.

The UI screen W57 is an example of a UI screen of the detail page that displays details of the exchange with the browsing user with respect to the user terminal 11 of the information providing user. On the UI screen W57, a title indicating the "Details" page, the content of the details, and a radio button for indicating agreement on use of the service are displayed in order from the top.

As the content of details, the followings are indicated. "When you start F_SNS regarding the use of the service, money is remitted from the other party through the information bank/asset management server. Please be careful not to show the real name or the like. The content of F_SNS is anonymized and automatically evaluated, and used to improve the service." The service is underlined on the screen and is a link L52 to a UI screen indicating what kind of service the service is. By the information providing user pressing the link L52, the UI screen indicating what kind of service it is can be displayed.

By the information providing user pressing the radio button, the agreement is accepted, and for example, the UI screen W58 of Fig. 24 is displayed.

The UI screen W58 is an example of the UI screen of the notification page that notifies the user terminal 11 of the information providing user of the charging for the exchange with the browsing user. Explanation of the same description as that of the UI screen W56 will be omitted. Note that the UI screen W58 illustrates an example in which the information providing user presses "YES" displayed in dark among the options.

As illustrated in the UI screen W58, by the information providing user pressing "YES" among the options, the SNS is started, and for example, the UI screen W59 in Fig. 25 is displayed.

Fig. 25 is an example of the UI screen displayed on the user terminal 11 while the information providing user and the browsing user perform exchange on the SNS in step S58 of Fig. 20 or when the exchange ends in step S62. The information regarding the UI is generated by, for example, the UI generation unit 63 of the information bank/asset management server 13.

In Fig. 25, the UI screen W59 of the F_SNS (exchange) page and a UI screen W60 of the evaluation display page of the other party are illustrated.

The UI screen W59 is an example of a UI screen of an SNS page on which the information providing user and the browsing user perform exchange on the F_SNS.On the UI screen W59, a title indicating the "F_SNS for oo credit association" page, a remaining time (3 minutes and 30 seconds), and conversations K1 to K4 are displayed in order from the top. That is, the UI screen W59 is different from the UI screen W54 in Fig. 23 in that the extension button B51 is removed. Other configurations are similar to those of the UI screen W54 in Fig. 23.

The UI screen W60 is an example of a UI screen of an evaluation input page for inputting the evaluation of the other party (browsing user) who has performed exchange. On the UI screen W60, a title indicating the "evaluation of the other party" input page, a mark of a star indicating evaluation to the other party with 5-level evaluation, a comment input field, and one option (end) are illustrated in order from the top.

In the star mark, five stars out of the five stars are input as the evaluation of the other party. In the comment input field, the evaluation of the other party "It was a good impression because the other party was very keen and honest on acquiring asset management skills." is input.

The information providing user inputs the evaluation of the other party on the UI screen W60, and then presses the end. As a result, the exchange with the browsing user ends.

### <3. Others>

### (Effects)

As described above, in the present technology, the information regarding the agreement to provide the financial transaction information between the first user and the financial institution and the selection information of the disclosure destination of the financial transaction information which are transmitted from the first terminal, and the asset management information including the financial transaction information that the first user has agreed to provide are managed, and the asset management information is provided to the service providing apparatus selected as the disclosure destination. Then, the information regarding the UI of the browsing page based on the asset management information is generated, the information regarding the UI of the browsing page is transmitted to the second terminal in response to a request from the second terminal used by the second user, the usage status of the UI of the browsing page by the second terminal is managed, and the information regarding the profit to be returned to the first user in accordance with the usage status is transmitted to the first terminal.

Therefore, according to the present technology, it is possible to easily acquire information regarding individual asset management. This makes it possible to refer to an investment method in individual asset management.

### (Configuration Example of Computer)

The above-described series of processing can be executed by hardware or software. In a case where the series of processing is executed by software, a program constituting the software is installed from a program recording medium to a computer incorporated in dedicated hardware, a general-purpose personal computer, or the like.

Note that the program executed by the computer may be a program in which processing is performed in time series in the order described in the present specification, or may be a program in which processing is performed in parallel or at necessary timing such as when a call is made.

Note that, in the present specification, a system means a set of a plurality of components (devices, modules (parts), etc.), and it does not matter whether or not all the components are in the same housing. Therefore, a plurality of devices housed in separate housings and connected via a network and one device in which a plurality of modules is housed in one housing are both systems.

Furthermore, the effects described in the present specification are merely examples and are not limited, and other effects may be provided.

The embodiments of the present technology are not limited to the above-described embodiments, and various modifications can be made without departing from the gist of the present technology.

For example, the present technology can have a configuration of cloud computing in which one function is shared and processed in cooperation by a plurality of devices via a network.

Furthermore, each step described in the above-described flowchart can be executed by one device or can be shared and executed by a plurality of devices.

Furthermore, in a case where a plurality of processes is included in one step, the plurality of processes included in the one step can be executed by one device or can be shared and executed by a plurality of devices.

### <Combination Example of Configurations>

The present technology can also have the following configurations.
(1) An information providing apparatus including:
   an information management unit that manages information regarding agreement to provide financial transaction information between a first user and a financial institution and selection information of a disclosure destination of the financial transaction information which are transmitted from a first terminal, and asset management information including the financial transaction information that the first user has agreed to provide;
   an information providing unit that provides the asset management information to a service providing apparatus selected as the disclosure destination;
   a generation unit that generates information regarding a UI of a browsing page based on the asset management information;
   a transmission unit that transmits the information regarding the UI of the browsing page to a second terminal used by a second user in response to a request from the second terminal; and
   a profit returning unit that manages a usage status of the UI of the browsing page by the second terminal, and transmits, to the first terminal, information regarding a profit to be returned to the first user in accordance with the usage status.
(2) The information providing apparatus according to (1), further including
   a reception unit that receives the information regarding the agreement and the selection information of the disclosure destination from the first terminal and receives the financial transaction information from a financial institution server of the financial institution.
(3) The information providing apparatus according to (2), in which
   the reception unit further receives credibility guarantee information for guaranteeing credibility of the financial transaction information from the financial institution server, and
   the information management unit also manages the credibility guarantee information.
(4) The information providing apparatus according to (2), in which
   the reception unit further receives attribute information of the first user from the first terminal, and
   the information management unit also manages the attribute information of the first user.
(5) The information providing apparatus according to any one of (1) to (4), in which
   the profit returning unit determines a profit to be returned to the first user on the basis of at least one of a usage fee of the asset management information in the service providing apparatus or a number of times of browsing of the UI of the browsing page by the second user.
(6) The information providing apparatus according to any one of (1) to (5), in which
   an operation member for the second user to directly exchange with the first user is displayed on the UI of the browsing page.
(7) The information providing apparatus according to (6), further including
   a connection control unit that connects the first terminal and the second terminal in accordance with an operation of the operation member on a UI of the browsing page by the second terminal.
(8) The information providing apparatus according to (7), further including
   a browsing information management unit that evaluates and manages a content of exchange between the first user and the second user performed during connection between the first terminal and the second terminal.
(9) The information providing apparatus according to (8), in which
   the browsing information management unit acquires and manages each of the evaluation for the first user and the evaluation for the second user after the end of the exchange between the first user and the second user.
(10) The information providing apparatus according to (8), in which
   the profit returning unit sets a profit to return a part of a fee paid from the financial institution to the first user in a case where the second user opens an account in the financial institution on the basis of the exchange.
(11) The information providing apparatus according to (8), in which
   the information providing unit provides information regarding the financial institution obtained in the exchange between the first user and the second user as feedback information to a financial institution server of the financial institution.
(12) The information providing apparatus according to any one of (1) to (11), in which
   a search condition of an investment case included in the asset management information and an investment case matching the search condition are displayed on a UI of the browsing page.
(13) The information providing apparatus according to (12), in which
   at least one of a successful investment case and a failed investment case is displayed on a UI of the browsing page.
(14) The information providing apparatus according to (12), in which
   an advertisement image provided from the service providing apparatus is displayed on a UI of the browsing page.
(15) The information providing apparatus according to any one of (1) to (14), in which
   the generation unit generates information regarding a UI of an information input page for obtaining agreement to provide the financial transaction information from the first user in the first terminal.
(16) The information providing apparatus according to (15), in which
   at least one of the financial institution that is a provider of the financial transaction information, a type of the financial transaction information to be provided, and a provision period of the financial transaction information is set in the UI of the information input page.
(17) An information providing method including:
   managing information regarding agreement to provide financial transaction information between a first user and a financial institution and selection information of a disclosure destination of the financial transaction information which are transmitted from a first terminal, and asset management information including the financial transaction information that the first user has agreed to provide;
   providing the asset management information to a service providing apparatus selected as the disclosure destination;
   generating information regarding a UI of a browsing page based on the asset management information;
   transmitting the information regarding the UI of the browsing page to a second terminal used by a second user in response to a request from the second terminal; and
   managing a usage status of the UI of the browsing page by the second terminal, and transmitting, to the first terminal, information regarding a profit to be returned to the first user in accordance with the usage status.
(18) A program causing a computer to function as:
   an information management unit that manages information regarding agreement to provide financial transaction information between a first user and a financial institution and selection information of a disclosure destination of the financial transaction information which are transmitted from a first terminal, and asset management information including the financial transaction information that the first user has agreed to provide;
   an information providing unit that provides the asset management information to a service providing apparatus selected as the disclosure destination;
   a generation unit that generates information regarding a UI of a browsing page based on the asset management information;
   a transmission unit that transmits the information regarding the UI of the browsing page to a second terminal used by a second user in response to a request from the second terminal; and
   a profit returning unit that manages a usage status of the UI of the browsing page by the second terminal, and transmits, to the first terminal, information regarding a profit to be returned to the first user in accordance with the usage status.
(19) An information processing terminal including:
   a provision agreement unit that obtains, from a user, agreement to provide financial transaction information between the user and a financial institution on the basis of an operation of the user;
   a transmission unit that transmits information regarding the agreement and selection information of a disclosure destination of the financial transaction information to an information providing apparatus; and
   a reception unit that receives, from the information providing apparatus, information regarding a profit to be returned to the user in accordance with the usage status by another information processing terminal of a UI of a browsing page based on asset management information including the financial transaction information, the information regarding the agreement, and selection information of a disclosure destination of the financial transaction information.
(20) An information processing terminal including:
   a communication unit that requests and receives, on the basis of an operation of the second user, information regarding agreement to provide financial transaction information between a first user and a financial institution, selection information of a disclosure destination of the financial transaction information, and information regarding a UI of a browsing page based on asset management information including the financial transaction information that the first user has agreed to provide; and
   an output control unit that controls an output of the received information regarding the UI of the browsing page.

### REFERENCE SIGNS LIST

- 1: Asset management information providing system
- 11: User terminal
- 12-1 to 12-n: Financial institution server
- 13: Information bank/asset management server
- 14-1 to 14-n: Service business server
- 15: User terminal
- 16: Internet
- 21: CPU
- 24: RAM
- 26: Input unit
- 27: Output unit
- 28: Communication unit
- 41: Control unit
- 42: Information provision agreement unit
- 43: Profit management unit
- 44: Display control unit
- 51: Control unit
- 52: Financial transaction information DB
- 61: Control unit
- 62: Information management unit
- 63: UI generation unit
- 64: Information providing unit
- 65: Advertisement data management unit
- 66: Browsing user management unit
- 67: Browsing information management unit
- 68: Profit return management unit
- 69: Connection control unit
- 71: Asset management information DB including personal information
- 72: Asset management information DB not including personal information
- 81: Control unit
- 82: BigData management DB
- 83: Advertisement management DB
- 91: Control unit
- 92: Display control unit

## Claims

1. An information providing apparatus comprising:
an information management unit that manages information regarding agreement to provide financial transaction information between a first user and a financial institution and selection information of a disclosure destination of the financial transaction information which are transmitted from a first terminal, and asset management information including the financial transaction information that the first user has agreed to provide;
an information providing unit that provides the asset management information to a service providing apparatus selected as the disclosure destination;
a generation unit that generates information regarding a UI of a browsing page based on the asset management information;
a transmission unit that transmits the information regarding the UI of the browsing page to a second terminal used by a second user in response to a request from the second terminal; and
a profit returning unit that manages a usage status of the UI of the browsing page by the second terminal, and transmits, to the first terminal, information regarding a profit to be returned to the first user in accordance with the usage status.

2. The information providing apparatus according to claim 1, further comprising
a reception unit that receives the information regarding the agreement and the selection information of the disclosure destination from the first terminal and receives the financial transaction information from a financial institution server of the financial institution.

3. The information providing apparatus according to claim 2, wherein
the reception unit further receives credibility guarantee information for guaranteeing credibility of the financial transaction information from the financial institution server, and
the information management unit also manages the credibility guarantee information.

4. The information providing apparatus according to claim 2, wherein
the reception unit further receives attribute information of the first user from the first terminal, and
the information management unit also manages the attribute information of the first user.

5. The information providing apparatus according to claim 1, wherein
the profit returning unit determines a profit to be returned to the first user on a basis of at least one of a usage fee of the asset management information in the service providing apparatus or a number of times of browsing of the UI of the browsing page by the second user.

6. The information providing apparatus according to claim 1, wherein
an operation member for the second user to directly exchange with the first user is displayed on a UI of the browsing page.

7. The information providing apparatus according to claim 6, further comprising
a connection control unit that connects the first terminal and the second terminal in accordance with an operation of the operation member on a UI of the browsing page by the second terminal.

8. The information providing apparatus according to claim 7, further comprising
a browsing information management unit that evaluates and manages a content of exchange between the first user and the second user performed during connection between the first terminal and the second terminal.

9. The information providing apparatus according to claim 8, wherein
the browsing information management unit acquires and manages each of the evaluation for the first user and the evaluation for the second user after the end of the exchange between the first user and the second user.

10. The information providing apparatus according to claim 8, wherein
the profit returning unit sets a profit to return a part of a fee paid from the financial institution to the first user in a case where the second user opens an account in the financial institution on a basis of the exchange.

11. The information providing apparatus according to claim 8, wherein
the information providing unit provides information regarding the financial institution obtained in the exchange between the first user and the second user as feedback information to the financial institution server of the financial institution.

12. The information providing apparatus according to claim 1, wherein
a search condition of an investment case included in the asset management information and an investment case matching the search condition are displayed on a UI of the browsing page.

13. The information providing apparatus according to claim 12, wherein
at least one of a successful investment case and a failed investment case is displayed on a UI of the browsing page.

14. The information providing apparatus according to claim 12, wherein
an advertisement image provided from the service providing apparatus is displayed on a UI of the browsing page.

15. The information providing apparatus according to claim 1, wherein
the generation unit generates information regarding a UI of an information input page for obtaining agreement to provide the financial transaction information from the first user in the first terminal.

16. The information providing apparatus according to claim 15, wherein
at least one of the financial institution that is a provider of the financial transaction information, a type of the financial transaction information to be provided, and a provision period of the financial transaction information is set in the UI of the information input page.

17. An information providing method comprising:
managing information regarding agreement to provide financial transaction information between a first user and a financial institution and selection information of a disclosure destination of the financial transaction information which are transmitted from a first terminal, and asset management information including the financial transaction information that the first user has agreed to provide;
providing the asset management information to a service providing apparatus selected as the disclosure destination;
generating information regarding a UI of a browsing page based on the asset management information;
transmitting the information regarding the UI of the browsing page to a second terminal used by a second user in response to a request from the second terminal; and
managing a usage status of the UI of the browsing page by the second terminal, and transmitting, to the first terminal, information regarding a profit to be returned to the first user in accordance with the usage status.

18. A program causing a computer to function as:
an information management unit that manages information regarding agreement to provide financial transaction information between a first user and a financial institution and selection information of a disclosure destination of the financial transaction information which are transmitted from a first terminal, and asset management information including the financial transaction information that the first user has agreed to provide;
an information providing unit that provides the asset management information to a service providing apparatus selected as the disclosure destination;
a generation unit that generates information regarding a UI of a browsing page based on the asset management information;
a transmission unit that transmits the information regarding the UI of the browsing page to a second terminal used by a second user in response to a request from the second terminal; and
a profit returning unit that manages a usage status of the UI of the browsing page by the second terminal, and transmits, to the first terminal, information regarding a profit to be returned to the first user in accordance with the usage status.

19. An information processing terminal comprising:
a provision agreement unit that obtains, from a user, agreement to provide financial transaction information between the user and a financial institution on a basis of an operation of the user;
a transmission unit that transmits information regarding the agreement and selection information of a disclosure destination of the financial transaction information to an information providing apparatus; and
a reception unit that receives, from the information providing apparatus, information regarding a profit to be returned to the user in accordance with the usage status by another information processing terminal of a UI of a browsing page based on asset management information including the financial transaction information, the information regarding the agreement, and the selection information of the disclosure destination of the financial transaction information.

20. An information processing terminal comprising:
a communication unit that requests and receives, on a basis of an operation of the second user, information regarding agreement to provide financial transaction information between a first user and a financial institution, selection information of a disclosure destination of the financial transaction information, and information regarding a UI of a browsing page based on asset management information including the financial transaction information that the first user has agreed to provide; and
an output control unit that controls an output of the received information regarding the UI of the browsing page.
